(19) Europäisches Patentamt
European Patent Office
Office européen des brevets

(11) EP 1 406 257 A1

(12) # EUROPEAN PATENT APPLICATION
published in accordance with Art. 158(3) EPC

(43) Date of publication:
**07.04.2004 Bulletin 2004/15**

(21) Application number: **02722719.8**

(22) Date of filing: **23.04.2002**

(51) Int Cl.7: **G11B 11/105**

(86) International application number:
**PCT/JP2002/004027**

(87) International publication number:
**WO 2002/089129 (07.11.2002 Gazette 2002/45)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **24.04.2001 JP 2001126158**

(71) Applicant: **Sony Corporation**
**Tokyo 141-0001 (JP)**

(72) Inventors:
- **FUJITA, Goro, c/o Sony Corporation Tokyo 141-0001 (JP)**
- **SAKAMOTO, Tetsuhiro, c/o Sony Corporation Tokyo 141-0001 (JP)**

(74) Representative: **Melzer, Wolfgang, Dipl.-Ing.**
**Patentanwälte**
**Mitscherlich & Partner,**
**Sonnenstrasse 33**
**80331 München (DE)**

(54) **OPTICAL RECORDING MEDIUM, PRODUCTION METHOD OF OPTICAL RECORDING MEDIUM, OPTICAL RECORDING METHOD AND OPTICAL REPRODUCING METHOD FOR OPTICAL RECORDING MEDIUM**

(57) In a DWDD (Domain Wall Displacement Detection) optical recording medium of a land and groove recording system, characteristics of a land and a groove can be well equilibrated by selecting a depth d (nm) of a groove 3 of an optical recording medium so as to satisfy the following equation:

$$3\lambda/8n < d < 1\lambda/2n \quad (1)$$

or

$$1\lambda/2n < d < 3\lambda/4n \quad (2)$$

FIG. 6

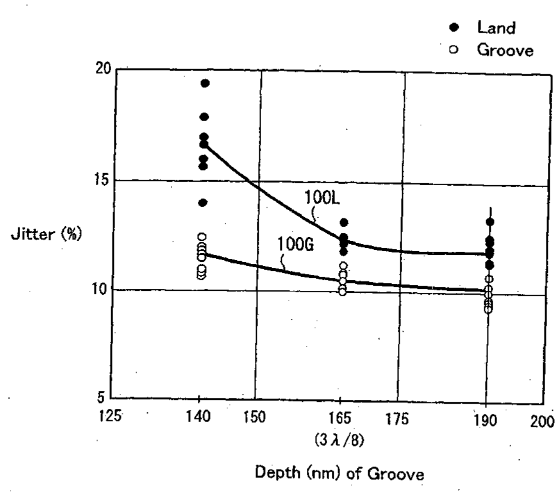




Printed by Jouve, 75001 PARIS (FR)

## Description

### TECHNICAL FIELD

The present invention relates to a domain wall displacement detection optical recording medium of a land and groove recording system, i.e., so-called DWDD optical recording medium, a manufacturing method of an optical recording medium, an optical recording method of an optical recording medium and an optical reproducing method of an optical recording medium, and particularly to a domain wall displacement detection optical recording medium, a manufacturing method of an optical recording medium, an optical recording method of an optical recording medium and an optical reproducing method of an optical recording medium in which land characteristics and groove characteristics can be equilibrated satisfactorily.

### BACKGROUND ART

In recent years, in order to increase a recording density of an optical recording medium as a recording density of an optical recording medium is increasing, so-called land and groove recording system for recording data both in a groove for effecting tracking servo and a land between the adjacent grooves, for example, has been put into practical use.

FIG. 1 is a schematic perspective view showing a main portion of an optical recording medium based upon this land and groove recording system. This optical recording medium 11 includes an optical recording medium substrate 1 comprising this optical recording medium and a groove 3 for obtaining a tracking servo signal, for example, is formed on the recording information forming surface of the optical recording medium substrate. This optical recording medium has an arrangement in which the side surface (one side surface in the illustrated example) 2 of the groove is formed as a wobbling side surface from which address information can be obtained.

Then, this optical recording medium 11 includes a groove recording portion 13 and a land recording portion 15 in which recording marks 4 formed when data information was recorded are recorded within the grooves 3 and the land 5 between the grooves 3 and becomes able to increase a recording density.

The example of FIG. 1 shows the case in which the recording marks 4 are recorded by a magnetic field modulation recording system, and in this case, the recording marks 4 are recorded such that they are partly overlapping with each other.

FIG. 2 shows a relationship between an amplitude of a tracking servo signal obtained from the grooves 3 in the optical recording medium, i . e. , push-pull amplitude and a phase depth $nd/\lambda$ of the groove 3 (where n is the refractive index of the optical recording medium substrate 1, d is the depth (nm) of the groove, and $\lambda$ is the wavelength (nm) of reproducing light)). In this case, the peak of the push-pull amplitude shows a discrete peak, i.e. , a peak in the depth of (2m+1)/8 (m represents 0 and a positive integer).

Then, in this kind of optical recording medium, the depth of the groove has been so far selected in a predetermined range z around optimum points about the shallowest groove depth of 1/8 of amplitude peaks of smaller depths , i.e. , of the first optimum point, the second optimum point, the third optimum point, ...

The depth of groove has been so far selected in the range z around the first optimum point of the shallowest depth in which the groove 3 and the land 5 can be molded with ease when the optical recording medium substrate 1 is manufactured by injection molding or 2P method (Photopolymerization method) , for example.

On the other hand, in order to reproduce the DWDD optical recording medium, domain walls are caused to move to enlarge the recording marks and the enlarged recording marks are read out from the optical recording medium when the recording marks are reproduced. With this arrangement, the recording mark can be formed as a miniscule recording mark whose diameter is less than the limit of the diameter of beam spot of reproducing light, and therefore the optical recording medium can increase its recording density.

FIG. 3 is a schematic cross-sectional view of an example of this DWDD optical recording medium, i. e., magneto-optical recording medium. As illustrated, this magneto-optical recording medium includes an optical recording medium substrate 1 on which there are laminated a non-magnetic dielectric layer 6, an information recording layer 20 of a laminated film composed of a displacement layer 7 made of a magnetic layer having a characteristic in which domain wall coercive force is small, a switching layer 8 made of a magnetic layer having a low Curie temperature and a recording layer 9 having a characteristic in which domain wall coercive force is large and a non-magnetic protective layer 10, in that order.

Usually, in this optical recording medium 11, the recording layer 9 and the displacement layer 7 are magnetically coupled together by exchange coupling via the switching layer 8, and the recording marks 4 that have been recorded on the. recording layer 9 are transferred to the displacement layer 7.

Then, when the optical recording medium is reproduced, laser light L illuminates the optical recording medium substrate 1 from its rear surface side, for example.

FIGS. 4 are diagrams to which reference will be made in explaining the manner in which the DWDD optical recording medium is reproduced by laser light illumination on the information recording layer 20 composedof the displacement layer 7, the switching layer 8 and the recording layer 9. In this case, FIG. 4A is a schematic plan view of a main portion of such domain wall displacement detection optical recording medium, and FIG. 4B is a schematic cross-sectional view corresponding to a magnetic area 7A in FIG. 4A and which illustrates the magnetized states by arrows.

As shown in FIG. 4A, although the track portion in which the DWDD operation is carried out, i.e. , domain walls are caused to move is formed as the magnetic area 7A, both sides of the track width direction of the displacement layer are formed as non-magnetic areas or areas 7B with different magnetic characteristics.

FIG. 4C is a diagram showing a characteristic curve indicative of a distribution of a temperature obtained from the optical recording medium 11 when the laser light L illuminates the optical recording medium.

FIG. 4 shows the case in which the optical recording medium moves from right to left in FIG. 4 as shown by an arrow a relative to the beam spot SP of laser light.

In this case, the position indicative of a peak Tp of temperature raised by laser illumination is set to the position b that is deviated to the rear side of the beam spot SP. Further, an isothermal curve, which serves as a Curie temperature Ts, is expanded to the rear side of the beam spot SP as shown by a broken line c in FIG. 4A, and the area, encircled by the broken line c, andwhose temperature is higher than the Curie temperature Ts is formed as a magnetization lost area 19 in which the magnetization of the switching layer 8 is lost shown hatched in FIG. 4B.

At that time, in the areas that are placed in the ordinary state, i.e., in other areas than the above-mentioned magnetization lost area 19, the recording marks 4 recorded on the recording layer 9 are transferred to the displacement layer 7 that is magnetically coupled to this recording layer 9 by exchange coupling via the switching layer 8 with the result that the recording marks 4, i.e., domain walls 14 comprising magnetic domains are placed at substantially the same positions in the recording layer 9 and the displacement layer 7.

However, in the above-mentioned magnetization lost area 19 in which the magnetization of the switching layer 8 is lost, since the exchange coupling between the recording layer 9 and the displacement layer 7 is broken, the domain walls 14 become able to move easily in the displacement layer 7. As a result, as shown in FIG. 4D, a domain wall 14D on the temperature peak Tp side expands to the position, shown by the broken line b, indicative of the temperature peak Tp in which domain wall drive force $F(x) = -\delta\sigma/\delta x$ ($\sigma$ is the domain wall energy) (domain wall drive force is negative and acts on the center side of light when +x assumes the tip end side of beam spot).

Specifically, the mark 4 in the displacement layer 7 on this area 19 is formed as an enlarged mark 4 that is made larger than the recording mark 4 in the recording layer 9.

Therefore, in the DWDD magneto-optical recording medium, when the recording mark 4 is reproduced by the detection method using the magneto-optical system as the enlarged mark 4D in the displacement layer 7, it becomes possible to reproduce this magneto-optical recording medium at a resolution higher than the original resolution that should be restricted by resolution of the optical system, i . e. , it becomes possible to reproduce the magneto-optical recording medium at a highdensity.

Then, as has already been reported in "ISOM 1992 Digest p47-", although information can be recorded on and reproduced from any one of the land and the groove according to the above enlarged reproducing operation, as shown in FIG. 4A, any one of the land and the groove of the displacement layer is formed as the magnetic area 7A and the other groove or land is formed as the non-magnetic area or the area 7B with the different magnetic characteristic when scanned by laser beam with high laser power.

According to the above-mentioned arrangement, movement of domain walls is limited with respect to the track width direction, whereby energy increased by expansion of the domain wall area in the track width direction can be suppressed, and hence domain walls can smoothly move in the track length direction. Moreover, since the magnetically discontinuous portions are formed with respect to the track width direction as described above, there is the effect that different movements of data can be prevented from being mixed between the adjacent tracks.

On the other hand, in the case of the DWDD system magneto-optical recording medium to which the land and groove recording system for recording information on both of the land and the groove is applied, the tracks should magnetically be separated from each other in the slope at the boundary between the land and the groove, i.e., at the side wall surface.

"ISOM 1992 Digest p75-", for example, has reported that the land and the groove of the DWDD magneto-optical recording medium can respectively be reproduced without the above-mentioned thermal treatment under the condition in which the depth of the groove is set to 160 nm and is also set to the depth corresponding to the period of m = 2 in the optical system having a wavelength of 660 nm.

Under the above-mentioned condition, however, it is difficult to obtain a satisfactory recording power margin characteristic in the land. Furthermore, a bottom jitter characteristic of the land is inferior to that of the groove, and a problem arises, in which characteristic of the land and groove recording cannot be equilibrated at a level suitable for practical use.

## DISCLOSURE OF THE INVENTION

As described above, in the DWDD magneto-optical recording medium of the land and groove recording system, since the bottom jitter.characteristic and recording power margin of the land are inferior to those of the land, there is a problem that characteristics of the land and the groove cannot be equilibrated at a level suitable for practical use.

As a result of earnest studies and considerations, the inventors of the present application have found out an optical recording medium, a manufacturing method of such optical recording medium and an optical recording and reproducing method in which the above-mentioned problems could be solved.

Specifically, the cause by which characteristics of the land and the groove are not well equilibrated in the land and groove recording as described above may be explained as follows.

It is customary to deposit the information recording layer 20 of the laminated layer composed of the above-mentioned magnetic layers on the optical recordingmedium substrate surface with the grooves formed thereon by a suitable method such as sputtering in the vacuum. When the information recording layer is deposited on the optical recording medium substrate surface, as FIG. 14A shows a cross-sectional view of the land 5 and the adjacent groove 3, flying particles 21 of deposited material are deposited on the surface of the optical recording medium substrate 1.

In this case, since the flying particles 21 are deposited not only on the surface of the optical recording medium substrate but also on the side surfaces of the optical recording medium substrate, a film having a mushroom-like cross-section in the track width direction is deposited on the land 5. Specifically, the information recording layer 20 is deposited on the land 5 so as to cover slopes 35 of the respective side surfaces of the land. Then, since the information recording layer is deposited on the groove 3 by the deposition of the flying particles 21 arrived at the bottom surface of the groove, the information recording layer is not deposited at all or a thin separated groove 22 is produced on the curved portion at which the slope 35 and the groove 3 are abutting against each other.

Therefore, domain wall movement degree (i. e., 1/domain wall coercive force) in the displacement layer 7 of the information recording layer 20 exhibits a lowest value, for example, in the separated groove 22 as shown in FIG. 14B, and the land 5 and the groove 3 are separated from each other magnetically. The recording marks 4 that have been transferred to the displacement layers 7 of to the land 5 and the groove 3 cause domain walls to move as shown by broken lines in FIG. 14C when the magneto-optical recording medium is reproduced as shown in FIGS. 4.

Although domain walls canmove based upon the recording marks of the tracks to be reproduced because the land and the groove are magnetically separated from each other, if the land and the groove are not magnetically separated from each other sufficiently, then domain walls are affected by the marks on the adjacent track so that domain walls cannot move rapidly.

Further, in this case, since the slopes 35 are formed at both sides of the land 5, the domain wall movement degree decreases gently. As a result, movement of domain walls is affected by the characteristic of the magnetic layer of the slope 35, and hence the domain wall movement amount or speed is small or low. For this reason, in the land and groove recording, the reproduced output amplitude of the recording mark in the land 5 is small as compared with that of the recording mark of the groove 3. As a result, sufficient bottom jitter characteristic cannot be produced in the land so that imbalance occurs in the characteristics of the land and the groove.

Specifically, from an ideal standpoint, if the land and the groove are magnetically separated from each other sufficiently and the domain wall movement degree of the land containing the slopes is high, then there can be brought about DWDD operation that is excellently balanced in land and groove characteristic.

Next, imbalance of recording power margins will be described with reference to FIGS. 15.

FIGS. 15A and 15B show a relationship between a cross-sectional view of the land 5 and the groove 3 and a domain wall movement degree similarly to FIGS. 14A and 14B. In FIGS. 15 , elements and parts identical to those of FIGS. 14 are denoted by identical reference numerals and therefore need not be described.

Let us now consider the case in which information was recorded on the groove 3 as shown in FIG. 15C1. Since the magnetic domain that has entered into the slope 35 via the separated groove 22 at the high recording power gently changes the domain wall movement degree in the slope 35 as shown in FIG. 15B, this entered magnetic domain exerts a small influence upon reproduction of the recording mark in the land 5.

On the other hand, having considered the case in which information was recorded on the land 5 as shown in FIG. 15C2, it is to be understood that the magnetic domain entered into the slope via the separated groove 22 at the high recording power rapidly changes its domain wall movement degree so that the entered magnetic domain exerts a large influence upon reproduction of the recording mark in the groove 3. A solid-line arrow and a dashed-line arrow in FLG. 15B schematically show magnitudes of cross-write (cross write) of the land and the groove in the form of the lengths of the respective arrows.

As described above, cross-write may occur easily in the groove 3 by the recording on the land 5 as compared with cross-write occurred in the land 5 by the recording on the groove 3. Specifically, the recording power margin relative to the land 5 is reduced in width so that imbalance occurs in the power margins.

FIG. 16 shows a jitter or bit error rate characteristic. A characteristic curve 51G shows jitter or bit error rate characteristic in the groove, and a characteristic curve 51L shows jitter or bit error rate characteristic in the land. These characteristic curves 51G and 51L are characteristic curves obtained when characteristic curves 51GA and 51LA dependent on the above-mentioned wall domain movement degree of the groove and the land and characteristic curves 51GB and 51LB dependent on the above-mentioned cross-write are synthesized with each other.

In FIG. 16, the characteristic curve 51 shows a so-called inherent characteristic.

A study of FIG. 16 reveals that the land is inferior in bottom jitter characteristic and the recording power margin is reduced in width as shown by the characteristic curve 51L.

It is an object of the present invention to provide a DWDD optical recording medium of a land and groove recording system, a manufacturing method of such optical recording medium and an optical recording and reproducing method in which a jitter characteristic in the land can be improved, a recording power margin can be improved and in which equilibrium between a characteristic on the land and a characteristic on the groove can be improved.

Specifically, an optical recording medium according to the present invention is a domain wall displacement detection optical recording medium of a land and groove recording system, i.e., magneto-optical recording medium in which a depth d (nm) of its'groove is selected so as to satisfy the following equation:

$$3\lambda/8n < d < 1\lambda/2n \quad (1)$$

or

$$1\lambda/2n < d < 3\lambda/4n \quad (2)$$

($\lambda$ is the wavelength (nm) of illumination light and n is the refractive index).

Also, an optical recording medium according to the .present invention is a domain wall displacement detection optical recording medium of a land and groove recording system in which a boundary between the land and the groove contains an inclined surface and in which a width WL (nm) of a flat portion of the land and a width WG (nm) of a flat portion of the land are selected so as to satisfy the following equations:

$$350(\lambda/N.A.)/(650/0.52) < WL < 550(\lambda/N.A.)/(650/0.52) \quad (3)$$

$$400(\lambda/N.A.)/(650/0.52) < WG < 600(\lambda/N.A.)/(650/0.52) \quad (4)$$

($\lambda$ is the wavelength of illumination light and N.A. is the numerical aperture of the objective lens)

A manufacturing method according to the present invention is a manufacturing method of the above-mentioned respective optical recording mediums, comprising a process for forming grooves on at least one surface of an optical recording medium substrate composed of these optical recording mediums and a process for forming an information recording layer including a laminated film of at least a recording layer, a switching layer and a displacement layer to record information on the surface in which these grooves are formed, wherein said manufacturing method according to the present invention is based upon conditions of at least the above-mentioned equation (1) or (2) and/or the above-mentioned equations (3) and (4).

A recording method of an optical recording medium according to the present invention is an optical recording and reproducing method of a domain wall displacement detection system based upon a land and groove recording system using the above-mentioned optical recording medium according to the present invention and in which information is recorded on the information recording layer by optical modulation recording using laser light in which a substantially width direction of groove is set to the direction of an electric field vector or by magnetic field modulation recording with illumination of similar laser light.

Further, an optical reproducing method of an optical recording medium according to the present invention is an optical recording and reproducing method of a domain wall displacement detection system based upon a land and groove recording system using the above-mentioned optical recording medium according to the present invention and in which information is read out from the optical recording medium by causing domain walls to move in the displacement layer of the information recording layer with illumination of reproducing laser light.

As described above, the present invention is characterized in that the groove depth d is selected in the ranges I and II, which have been described in the above-mentioned equations (1) and (2) , and which are deeper than a range z near the shallow first optimum point that has been described so far with reference to FIG. 2. With this arrangement, the jitter characteristic with respect to the land could be improved, the recording power margin could be improved and balance between the land and the groove could be improved.

The reason for these improvements may be considered as follows. A cause for such improvements may be considered such that, since the groove depth was increased as compared with the conventional groove depth, cross-talk caused by heat generated when the optical recording medium is irradiated with reproducing light could be decreased so that cross-write, for example, could be improved. Moreover, the jitter bottom characteristic could be improved according to the present invention.

A cause for this may be considered such that remarkable discontinuous portions are produced at both sides of the grooves of the information recording layer, i.e., in the films comprising the information recording layer between the adjoining lands because thermal conductivity is lowered as the film quality or the film thickness changes. These discontinuous portions can promote the magnetic separation of the groove and the land, in particular, the domain walls can move rapidly in the land. As a result, since jitter is decreased at the marks formed by small recording power, the lower limit of the power margin can be suppressed from being lowered. Further, since the cross-write is suppressed from entering into the adjacent track, the upper limit of the power margin can be increased.

Furthermore, cross-write and jitter could be improved. by selecting the above-mentioned equations (3) and (4) as will be described later on.

BRIEF DESCRIPTION OF DRAWINGS

FIG. 1 is a schematic perspective view of a main portion of an optical recording medium of a land and groove recording system, FIG. 2 is a diagram showing a relationship between a phase depth of a groove and a push-pull amplitude in an optical recording medium, FIG. 3 is a schematic cross-sectional view of an example of a domain wall displacement detection optical recording medium according to the present invention, FIGS. 4 are diagrams to which reference will be made in explaining the manner in which the domain wall displacement detection optical recording medium is reproduced, wherein FIG. 4A is a schematic plan view of amain portion, FIG. 4B is a schematic cross-sectional view corresponding to FIG. 4A, FIG. 4C is a diagram showing a characteristic curve indicative of a distribution of temperature, and FIG. 4D is a diagram showing a characteristic curve indicative of domain wall drive force, FIG. 5 is a block diagram showing an arrangement of an example of an optical recording and reproducing apparatus which can carry out an optical reproducing method according to the present invention, FIG. 6 is a diagram of measured results of characteristic curves indicative of groove depth dependence of jitter, FIG. 7 is a diagram of measured results of characteristic curves indicative of land width dependence of jitter, FIG. 8 is a diagram of measured results of characteristic curves indicative of groove width dependence of jitter, FIG. 9 is a diagram of measured results of characteristic curves indicative of a relationship between bit error rate and recording power obtained when the groove is 190 nm in depth, FIG. 10 is a diagram of measured results of characteristic curves indicative of a relationship between bit error rate and recording power obtained when the groove is 165 nm in depth, FIG. 11 is a diagramof measured results of characteristic curves indicative of a relationship between power margins and track pitches obtained when the depth of the groove is changed, FIG. 12 is a diagramof measured results of characteristic curves indicative of a relationship between a C/N and recording power obtained when the plane of polarization of recording laser is set to the groove width direction, FIG. 13 is a diagram of measured results of characteristic curves indicative of a relationship between a C/N and recording power obtained when the plane of polarization of recording laser is set to the groove length direction, FIGS. 14 are diagrams to which reference will be made in explaining the manner in which domain walls are caused to move in the land and groove recording system, wherein FIG. 14A is a cross-sectional view of its land and groove, FIG. 14B is a diagram showing a domain wall movement degree and FIG. 14C is a diagram useful for explaining the manner in which domain walls are caused to move in the recording mark, FIGS. 15 are diagrams to which reference will be made in explaining cross-write in the land and groove recording system, wherein FIG. 15A is a cross-sectional view of its land and groove, FIG. 15B is a diagram showing a relationship between domain wall movement degree and cross-write and FIGS. 15C1 and 15C2 are diagrams to which reference will be made in explaining the manner in which domain walls are caused to move in the recording mark, and FIG. 16 is a diagram showing jitter characteristic of the land and groove.

BEST MODE FOR CARRYING OUT THE INVENTION

An optical recording medium according to the present invention has an arrangement of the optical recording medium using the DWDD reproducing method of the land and groove recording system, i.e., an arrangement of the magneto-optical recording medium as mentioned hereinbefore. An optical recording medium according to an embodiment of the present invention can be constructed as shown in FIGS. 1 and 3.

However, it is needless to say that the optical recording medium according to the present invention is not limited to the above-mentioned arrangement.

In this embodiment, as shown in FIG. 1, a plurality of grooves 3 that are parallelly arrayed in a multiplexed spiral fashion, for example, or in a concentric-circles fashion, for example, are formed on one maj or surf ace, for example of an optical recording medium substrate 1 made of a suitable resin such as polycarbonate (PC) or polymethylmethacrylate (PMMA) or other suitable substrate material such as a glass substrate, and a land 5 is formed between adjacent grooves.

In this embodiment, one side surface 2 of the land 5 is formed as a wobbling side surface from which an address signal, for example, can be obtained.

The depth d of the groove 3 is not set in the range z of the shallow area shown in FIG. 2 unlike the prior art but it is selected, in particular, in the deeper specific range I or II, i.e. the range shown by the aforementioned equation (1) or (2) as mentioned hereinbefore

A boundary between the land 5 and the groove 3 contains an inclined surface and a width WL [nm] of the flat portion of the land 5 and a width WG [nm] of the flat portion of the groove 3 are selected so as to satisfy the following equations:

$$350(\lambda/N.A.)/(650/0.52) < WL < 550\,(\lambda/N.A.)/(650/0.52) \quad (3)$$

$$400(\lambda/N.A.)/(650/0.52) < WG < 600\,(\lambda/N.A.)/(650/0.52) \quad (4)$$

Further, a pitch GP (μm) of a groove is selected so as to satisfy the following equation:

$$1.0(\lambda/N.A.)/(650/0.52) < GP < 1.3(\lambda/N.A.)/(650/0.52) \quad (5)$$

where $\lambda$ is the wavelength (nm) of reproducing optical system and N.A. is the numerical aperture of the objective lens.

Then, on the surface in which the lands and the grooves of the optical recording medium substrate 1 are formed, as shown in FIG. 3, there are laminated a non-magnetic dielectric layer 6, an information recording layer 20 of a laminated film of a displacement layer 7 having small domain wall coercive force, a switching layer 8 having a low Curie temperature Ts and a recording layer 9 having large domain wall coercive force, each of the displacement layer, the switching layer and the recording layer being made of a magnetic layer, and a non-magnetic protective layer 10, in that order.

In this optical recording medium 11, as has been described so far with reference to FIGS. 4, the area 19 in which the magnetization of the switching layer 18 is lost is formed shown hatched in FIG. 4B by the temperature distribution (FIG. 4C) produced by illumination of laser light L. Since exchange coupling between the recording layer 9 and the displacement layer 7 is broken on this area 9, the domain walls 14 become able to move easily in the displacement layer 7 and the domain wall 14D on the temperature peak Tp side expands to the position shown by a chained line b indicative of the temperature peak, thereby being formed as an enlarged mark 4D that is made larger than the recording mark 4.

On the other hand, according to the manufacturing method of the optical recording medium of the present invention, the optical recording medium substrate 1 is formed by injection molding using the resin such as the aforementioned PC or PMMA. Then, a stamper with a predetermined concave and convex pattern is disposed within a cavity of a metal mold for molding this optical recording medium substrate, whereby the aforementioned groove 3 and land 5 are formed on one major surface, for example of the optical recording medium substrate 1 by transferring the concave and convex pattern of the stamper at the same time the optical recording medium substrate 1 is molded

Alternatively, the optical recording medium substrate may be formed by so-called 2P (Photopolymerization method) method in which a ultraviolet-curing resin is coated on the surface of a glass substrate having a flat surface, for example, or on the surface of a resin substrate made of a suitable resin such as PC or PMMA, and the aforementioned groove 3 and land 5 are transferred to the surface of the optical recording medium substrate by pressing the stamper with the predetermined concave and convex pattern on the surface of the optical recording medium substrate.

On the thus formed optical recording medium substrate 1 at its surface in which the land and the groove were formed, there is deposited the information recording layer 20, sequentially composed of the displacement layer 7, the switching layer 8 and the recording layer 9 shown in FIG. 3 by magnetron sputtering, for example, on which the protective layer 10, e.g. ultraviolet-curing resin is deposited by rotary coating method.

An optical reproducingmethod according to the present invention will be described with reference to FIG. 5 that is a block diagram showing an arrangement of an example of a recording and reproducing apparatus in conj unction with a recording method thereof.

This recording and reproducing apparatus may have a well-known arrangement. Specifically, this recording and reproducing apparatus includes a drive device for driving the optical recordingmedium 11, in this embodiment, an optical disk, i.e., this recording and reproducing apparatus includes a spindle motor 61 for rotating the optical disk. The recording and reproducing apparatus further includes a recording magnetic head 62 disposed at one side of the optical disk 11 in an opposing relation, an optical pickup device 63 disposed on the other side of the optical disk 11 and a circuit unit 64 for driving and controlling the optical pickup device 63 and which is suitable for use in recording and reproducing operations.

The recording magnetic head 62 and the optical pickup device 63 are constructed such that they can move radially on the optical disk 11.

The optical pickup device 63 includes a light source, e. g. semiconductor laser 65, a collimator lens 66, a beam splitter 67, an objective lens 68 and a biaxial actuator 69 that is used to control the focusing position and the tracking position of this objective lens 68 relative to the optical disk 11.

This optical pickup device further includes a polarizing beam splitter 70, collimator lenses 71 and 72 disposed at two light paths diverged by the polarizing beam splitter and photo-detecting elements 73 and 74, e. g. quadrant photo-diodes.

Furthermore, the circuit unit 64 includes a recording signal input terminal 75, a magnetic head drive circuit 76, a drive circuit 77 for driving the semiconductor laser 65, a current-to-voltage converting circuit 78, a matrix circuit 79, a phase compensating circuit 80, a biaxial drive circuit 81, a sector detecting circuit 82, a timing generating circuit 83, an amplitude detecting circuit 84, a reproduced signal output terminal 85, a power setting circuit 86 and the like.

In this embodiment, information is recorded on the optical disk, i.e., optical recording medium 11 bymagnetic field modulation method. In this case; laser light generated from the semiconductor laser 65 is irradiated on the optical disk 11 at its positions in which the aforementioned grooves 3 and lands 5 are recorded with predetermined recording power by the collimator lens 66, the beam splitter 67 and the objective lens 68, and the optical recording medium is heated with laser light illumination. On the other hand, a recording signal magnetic field from the magnetic head 62 through the magnetic head drive circuit 76 controlled by the recording signal from the recording signal input terminal 75 is applied to these laser light illumination positions to cause recording magnetic domains, i.e., the recording marks 4 to be formed on the information recording layer of the optical recording medium 11.

When information is recorded on the optical recording medium, returned light of laser light is introduced into the photo-detecting elements 73 and 74 by the beam splitter 67 and the polarizing beam splitter 70 and the collimator lenses 71 and 72. Then, output currents obtained from the respective quadrant photo-diodes 1A to 1D, 2A to 2D comprising these photo-detecting elements 73 and 74 are converted into voltage signals by the current-to-voltage converting circuit 78 and inputted to the matrix circuit 79, and the matrix circuit calculates these inputted voltage signals to provide a focus error signal FE, a tracking error signal TE and a sum signal RF. Then, the signals FE and TE are inputted to the phase-compensating circuit 80 to thereby control the biaxial drive circuit 81, whereby the biaxial actuator 69 of the obj ective lens 68 is operated to carry out focusing and tracking control operations.

On the other hand, the sum signal RF is inputted to the sector detecting circuit 82, and a sector detecting signal from the sector detecting circuit is supplied to the timing generating circuit 83. Then, the power setting circuit 86 is controlled by a timing signal from the timing generating circuit and laser light is irradiated on the predetermined land and groove of the optical recording medium by the laser drive circuit 77. Thus, information is recorded on the optical recording medium by the above-mentioned recording magnetic head 62.

When recording marks are read out from the optical recording medium 11, i.e., the optical recording medium is optically reproduced, laser light from the similar semiconductor laser 65 is illuminated on the optical recording medium 11 and the enlarged mark 4D that has been enlarged as domain walls move in the aforementioned displacement layer 7 is formed and then, light is splitted by the polarizing beam splitter 70 whose plane of polarization is rotated by magneto-optical interaction in the enlarged mark 4D, i.e., Kerr effect, and this light is introduced into the photo-detecting element 74, in which it is processed to provide a current signal. The current signal from the photo-detecting element 74 is supplied to the current-to-voltage converting circuit 78 and the matrix circuit 79 and thereby outputted as a recording information signal MO. Then, this recording information signal is supplied to the amplitude detecting circuit 84 under control of the timing signal generated from the aforementioned timing generating circuit 83 and thereby amplitude-detected. The thus amplitude-detected signal is outputted from a terminal 85.

Similarly to the ordinary operation, the matrix circuit 79 may calculate the following equations to provide the above-mentioned respective signals RF, FE, TE and MO.

Specifically, when 1A to 1D and 2A to 2D assume the respective outputs from the respective quadrant photo-diode elements of the above-mentioned photo-detecting elements 73 and 74 as shown in FIG. 5, the above-mentioned respective signals are obtained as follows:

$$RF = 1A + 1B + 1C + 1D + 2A + 2B + 2C + 2D$$

$$FE = (1A + 1C) - (1B + 1D) + (2A + 2C) - (2B + 2D)$$

$$TE = (1A + 1B) - (1D + 1C) + (2A + 2B) - (2D + 2C)$$

$$MO = (1A + 1B + 1C + 1D) - (2A + 2B + 2C + 2D)$$

The recording marks 4 can be recorded and reproduced as described above. When the recording marks are recorded and reproduced, recording laser light and reproducing laser light having a plane of polarization and in which substantially the width direction of the groove is set to the direction of the electric field vector illuminate the optical recording medium.

Next, specific examples of the optical recording medium, the manufacturing method of theoptical recordingmedium and the optical reproducing method according to the present invention will be described.

An optical disk was constructed as an optical recording medium. In this optical disk, the optical recording medium substrate 1 in which the land 5 is formed on one major surface and in which the groove 3 having the side surface 2 formed as the wobbling side surface from which the address signal can be outputted is formed as shown in FIG. 1 was formed by injection molding.

The light transmission dielectric layer 6 formed of a silicon nitride layer having a thickness of 35 nmwas deposited on one major surface of the optical recording medium substrate 1, which has the land 5 and the groove 3, by magnetron sputtering. On this dielectric layer, there were deposited the displacement layer 7 made of GdFeCoAl having a thickness of 30 nm, the switching layer 8 made of TbFeCoAl having a thickness of 15 nm and the recording layer 9 made of TbFeCo having a thickness of 55 nm as the information recording layer 20, in that order. Then, on the information recording layer, there was further deposited the protective layer made of a ultraviolet-curing resin having a thickness of 10 μm by spin coating method, and then the protective layer was cured with illumination of ultraviolet rays.

In the optical recording medium having the above arrangement, a large number of samples 1 in which the depth d of the groove 3 was selected to be 165 nm and samples 2 in which the depth of the groove was selected to be 190 nm were manufactured, respectively.

As comparative examples 3, there were manufactured a large number of samples 3 having similar arrangement in which the depth d of the groove 3 was selected to be 145 nm.

These samples 1 to 3 were recorded and reproduced by the recording and reproducing apparatus shown in FIG. 5. The optical system had an arrangement suitable for use with MD-DATA2 in which an objective lens had a numerical aperture N.A. of 0.52 and in which illumination laser light had a wavelength λ of 650 nm, the polarization direction of incident light being set to the direction perpendicular to the groove. Information was recorded on the recording layer 9 by pulse strobe magnetic field modulation recording at a linear velocity of 1.8 m/s. When recorded information is reproduced from the optical recording medium, power of illumination light was set to a range of from 1. 4 mW to 2.0 mW in which the DWDD becomes able to operate, and the change of the magneto-optical differential signal obtained when domain walls moved in the displacement layer 7 was electromagnetically converted and thereby the signal was detected. Recording data was recorded on the optical recording medium at a channel clock of 18 MHz by using (1.7) RLL modulation random signal. The linear density corresponds to 0.15 μm/bit.

In the above-mentioned respective samples 1 to 3, there were prepared a plurality of respective samples in which ratios between the land width and the groove width were changed, respectively. Then, jitter of these samples was measured, and groove depth dependence of jitter was measured.

Measured results were plotted in FIG. 6. As illustrated, groove depth dependence of jitter in the land recording portion was shown by a characteristic curve 100Land and groove depth dependence of jitter in the groove recording portion was shown by a characteristic curve 100G.

As is clear from these characteristic curves, when the depth of the groove is selected to be 140 nm that is smaller than those of the aforementioned equations (1) and (2) according to the present invention, although jitter in the land recording portion increases extremely, a satisfactory characteristic in which jitter is less than 12.5 % can be obtained if the groove depth is larger than an inflection point where the inflection point is assumed to be 165 nm that corresponds to 3λ/8.

In this manner, bottom jitter can be improved by increasing the depth of the groove. The reason for this may be considered such that the above-mentioned domain wall movement degree in the slope of the land is changed by increasing the depth of the groove.

This is the reason why the depths of the grooves indicated by the aforementioned equations (1) and (2) are selected so as to fall within the ranges I and II that are deeper than the conventional depth of the groove in a range in which the push-pull amplitude, i.e., track signal can be obtained as shown in FIG. 2 according to the present invention.

FIGS. 7 and 8 are diagrams showing correlation results between the widths WL and WG of the respective flat portions of the land and the groove and bottom jitter characteristics of the respective samples 1 and 2 that had been visually confirmed by an SEM (scanning electron microscope). In FIG. 7, solid triangles show measured correlation results of the sample 1, i.e., measured correlation results obtained when the depth d of the groove was selected to be equal to 190 nm, and solid squares show measured correlation results of the sample 2, i.e., measured correlation results obtained when the depth d of the groove was selected to be equal to 190 nm. In FIG. 8, open triangles show measured correlation results of the sample 1, i.e., measured correlation results obtained when the depth d of the groove was selected to be equal to 165 nm, and open squares show measured correlation results of the sample 2, i.e., measured correlation results obtained when the depth d of the groove was selected to be equal to 190 nm.

From FIGS. 7 and 8, it is to be understood that jitter increases unavoidably as the land width WL and the groove width WG increase excessively.

Specifically, in the DWDD optical recording medium, the land width WL is selected in a range of from 0.35 μm to 0.50 μm shown by the aforementioned equation (3) , preferably, the land width should be selected in a range of from 0.37 μm to 0.50 μm.

Further, the groove width WG is selected in a range of from 0.40 μm to 0.60 μm shown by the equation (4) , preferably the groove width should be selected in a range of from 0.41 μm to 0.58 μm.

FIGS. 9 and 10 are diagrams showing measured results of properties of bit error rate (signal error rate) dependent on recording laser power Pw obtained when information was recorded on the optical recording medium by the above-mentioned recording method and reproduced from the optical recording medium, respectively. FIG. 9 shows measured results of properties of bit error rate dependent on recording laser power obtained when the groove depth was selected to be 190 nm, and FIG. 10 show measured results of properties of bit error rate dependent on recording laser power obtained when the groove depth was selected to be equal to 165 nm. In FIGS. 9 and 10, solid squares show measured results obtained when relationships between recording laser power Pw used to record information only on the land and bit error rate caused upon reproduction are plotted. Further, in FIGS. 9 and 10, open squares show measured results obtained when relationships between recording laser power Pw used to record information on the land after information had been recorded on only the groove adjacent to the land before information is recorded on the land, i.e., similar recording laser power required in the presence of influence of cross-write caused in the groove recording and bit error rate produced upon reproduction were plotted.

Furthermore, in FIGS. 9 and 10, solid circles show measured results obtained when relationships between recording laser power Pw used to record information only on the groove and bit error rate produced upon reproduction were plotted. Open circles show measured results obtained when relationships between recording laser power used to record information on the groove after information had been similarly recorded on the land adjacent to the groove before information is recorded on the groove, i.e., similar recording laser power Pw required in the presence of influence of cross-write caused in the land recording and bit error rate produced upon reproduction were plotted.

Specifically, in the land and groove recording, having considered cross-write interferences of land recording and groove recording, it is to be understood that bit error rates concerning the land recording and the groove recording are shown by solid-line curves 101L and 101G in FIG. 9 when the groove depth was selected to be 190 nm and that they are shown by solid-line curves 102L and 102G in FIG. 10 when the groove depth was selected to be 165 nm.

Specifically, let it be assumed that a threshold value of bit error rate, for example, is $5 \times 10^{-4}$. Then, in the land and groove recording, minimum recording power at which bit error rate produced when information is recorded on only the land and when information is recorded on only the groove becomes less than $5 \times 10^{-4}$ determines the lower limit of recording power margin, and maximum recording power in which bit error rate in the cross-write characteristic becomes less than $5 \times 10^{-4}$ determines the upper limit of recording power margin.

When the groove depth is 190 nm, for example, if the threshold value of the bit error rate is selected to be $5 \times 10^{-4}$ as described above, then as shown by the solid-line curve 101G, the lower limit of recording power in the groove becomes about 2.6 mW, the upper limit of recording power becomes about 7.2 mW, and the power margin becomes. about 2.6 mW. On the other hand, the lower limit of recording power in the land becomes about 5.1 mW, the upper limit of recording power becomes about 6.9 mW, and the power margin becomes about 1.8 mW. Hence, the recording power margin is small as compared with that of the groove recording.

FIG. 11 is a diagram showing measured results of properties of the power margin dependent on the track pitch Tp obtained when the groove depth was selected to be 190 nm and 165 nm. In the figure, solid squares and solid circles show power margins plotted after the track pitch Tp in the land and groove recording had been changed when the groove depth was selected to be 190 nm. In the figure, open squares and open circles show power margins after the track pitch Tp in the land and groove recoding had been changed when the groove depth was selected to be 165 nm.

From this figure, it is to be understood that the power margin increases as the depth of the groove increases.

When the track pitch Tp is selected to be equal to 1.0 μm and the groove depth is selected to be larger than 165 nm, for example, there can be maintained a power margin larger than ± 10% that is required in practical use.

Further, according to the present invention, while the plane of polarization of laser light required when information is recorded on and reproduced from the optical recording medium is being set to the direction in which an electric field vector is directed to substantially the width direction of the groove 3, the optical recording medium is recorded and reproduced as shown in FIG. 5.

FIGS. 12 and 13 are diagrams showing measured results of a relationship between recording laser power and C/N (carrier/noise). FIG. 12 shows measured results of a relationship between recording laser power and C/N obtained when the direction of plane of polarization according to the present invention, i.e., the electric field vector direction was set to the direction perpendicular to the groove, i.e., the width direction of the groove. FIG. 13 shows measured results of a. relationship between recording laser power and C/N obtained when the direction of plane of polarization, i.e. , the direction of the electric field vector was set to the direction parallel to the groove, i.e., the longitudinal direction of the groove. In FIGS. 12 and 13, solid squares and solid circles show the case in which 2T marks are respectively recorded on the land 5 and the groove 3, i.e., one mark is recorded on the land and the groove by 2 pulses, respectively. Open squares and open circles show the case in which 8T marks are respectively recorded on the land 5 and the groove 3, i.e., one mark is recorded on the land and the groove by 8 pulses, respectively.

As is clear from the comparison of FIGS. 12 and 13, the C/N can be increased by selecting the plane of polarization. As has been reported in "ODS 2000 Proceedings of SPIE p74", the reason for this may be considered such that an effective beam profile is deformed on the land and groove by the plane of polarization. In particular, it may be considered that when the phase depth of the groove depth is set to be larger than 3/8, a difference between the groove depth and the phase depth becomes remarkable.

As will become clear from the above descriptions, in the optical recording medium according to the present invention, since the groove depth is selected so as to fall within the specific ranges I and II that are larger than those of the prior art, when the DWDD optical recording medium of the land and groove recording system is reproduced, bottom characteristic and power margin in the land portion and the groove portion can be improved considerably. Hence, it is possible to carry out optical recording and optical reproduction which are excellent in balance of characteristic of the land and the groove.

The reason for this may be considered such that, since the depth of the groove is selected to be large, when the information recording layer 20 of the optical recording medium is deposited as has been described with reference to FIGS. 14, the mushroom-like films are deposited so that flying particles that should be deposited at the boundary between the side surface of the groove and the bottom surface of the groove decrease. As a consequence, the land and the groove can satisfactorily be separated from each other thermally and magnetically.

As described above, according to the optical recording medium of the present invention and according to the recording method and the reproducing method of the present invention, when the DWDD optical recording medium of the land and groove recording system is reproduced, since the bottom characteristic and the power margin in the land portion and the groove portion can be improved remarkably, it is possible to carry out optical recording and optical reproduction that are excellent in balance of characteristics in the land and the groove.

## Claims

1. In a domain wall displacement detection optical recording medium of a land and groove recording system, said optical recording medium **characterized in that** a depth d (nm) of a groove is selected so as to satisfy the following equation:

$$3\lambda/8n < d < 1\lambda/2n \qquad (1)$$

or

$$1\lambda/2n < d < 3\lambda/4n \qquad (2)$$

(where $\lambda$ is the wavelength of illumination light and n is the refractive index).

2. In a domain wall displacement detection optical recording medium of a land and groove recording system, said optical recordingmedium **characterized in that** a boundary between said land and said groove contains an inclined surface and that a width WL (nm) of a flat portion of said land and a width WG (nm) of a flat portion of said groove are selected so as to satisfy the following equations:

$$350(\lambda/N.A.)/(650/0.52) < WL < 550(\lambda/N.A.)/(650/0.52) \qquad (3)$$

$$400(\lambda/N.A.)/(650/0.52) < WG < 650(\lambda/N.A.)/(650/0.52) \qquad (4)$$

(where $\lambda$ is the wavelength of illumination light and N.A. is the numerical aperture of the objective lens).

3. In an optical recording medium according to claim 1 or 2, said optical recording medium **characterized in that** a pitch GP (μm) of a groove is selected so as to satisfy the following equation:

$$1.0(\lambda/N.A.)/(650/0.52) < GP < 1.3(\lambda/N.A.)/(650/0.52) \qquad (5)$$

(where $\lambda$ is the wavelength (nm) of illumination light and N.A. is the numerical aperture of the objective lens).

4. In an optical recording medium according to claim 1, 2 or 3, said optical recording medium **characterized in that** an information recording layer in which information is recorded is formed across said land and said groove.

5. In a manufacturing method of a domain wall displacement detection optical recording medium of a land and groove recording system, said manufacturing method of an optical recording medium comprising the steps of:

   a process for forming grooves on at least one surface of an optical recording medium substrate comprising said optical recording medium; and

a process for forming an information recording layer including a laminated film of at least a recording layer, a switching layer and a displacement layer to record information on the surface in which said grooves are formed and that a depth d (nm) of a groove is selected so as to satisfy the following equation:

$$3\lambda/8n < d < 1\lambda/2n \quad (1)$$

or

$$1\lambda/2n < d < 3\lambda/4n \quad (2)$$

(where $\lambda$ is the wavelength of illumination light and n is the refractive index).

**6.** In a manufacturing method of a domain wall displacement detection optical recording medium of a land and groove recording system, said manufacturing method of an optical recording medium comprising the steps of:

a process for forming grooves on at least one surface of an optical recording substrate comprising said optical recording medium; and
a process for forming an information recording layer having a laminated film of at least a recording layer, a switching layer and a displacement layer to record information on said groove forming surface, wherein a boundary between said land and said groove includes an inclined surface and a width WL (nm) of a flat portion of said land and a width WG (nm) of a flat portion of said groove are selected so as to satisfy the following equations:

$$350(\lambda/N.A.)/(650/0.52) < WL < 550(\lambda/N.A.)/(650/0.52) \quad (3)$$

$$400(\lambda/N.A.)/(650/0.52) < WG < 600(\lambda/N.A.)/(650/0.52) \quad (4)$$

(where $\lambda$ is the wavelength (nm) of illumination light and N.A.

is the numerical aperture of the objective lens).

**7.** In a manufacturing method of an optical recording medium according to claim 5 or 6, said manufacturing method of an optical recording medium **characterized in that** a pitch GP (μm) of a groove is selected so as to satisfy the following equation:

$$1.0(\lambda/N.A.)/(650/0.52) < GP < 1.3(\lambda/N.A.)/(650/0.52) \quad (5)$$

(where $\lambda$ is the wavelength (nm) of illumination light and N.A. is the numerical aperture of the objective lens).

**8.** In a manufacturing method of an optical recording medium according to claim 5, 6 or 7, said manufacturing method of an optical recording medium **characterized in that** an information recording layer of said optical recording medium is formed across said land and said groove.

**9.** In an optical recording method of a domain wall displacement detection optical recording medium of a land and groove recording system, said optical recording method of an optical recording medium **characterized in that** information is optically recorded on an optical recording medium in which an information recording layer of laminated layer of respective magnetic layers of at least a recording layer, a switching layer and a displacement layer is formed across said land and in which a depth d (nm) of a groove is selected so as to satisfy the following equation:

$$3\lambda/8n < d < 1\lambda/2n \quad (1)$$

or

$$1\lambda/2n < d < 3\lambda/4n \quad (2)$$

(where $\lambda$ is the wavelength of illumination light and n is the refractive index) and that information is optically recorded on said groove such that information is recorded on said information recording layer in an optical modulation recording fashion using laser light in which substantially the width direction of said groove is set to the direction of an electric field vector or that information is recorded on said information recording layer by a magnetic field modulation recording fashion with illumination of laser light in which substantially the width direction of said groove is set to the direction of an electric field vector.

**10.** In an optical recording method of a domain wall displacement detection optical recording medium of a land and groove recording system, information is optically recorded on an optical recording medium in which an information recording layer of a laminated layer of respective magnetic layers of at least a recording layer, a switching layer and a displacement layer is formed across said land and said groove and a width WL (nm) of a flat portion of said land and a width WG (nm) of a flat portion of said groove are selected so as to satisfy the following equations:

$$350(\lambda/N.A.)/(650/0.52) < WL < 550(\lambda/N.A.)/(650/0.52) \quad (3)$$

$$400(\lambda/N.A.)/(650/0.52) < WG < 600(\lambda/N.A.)/(650/0.52) \quad (4)$$

(where $\lambda$ is the wavelength (nm) of illumination light and N.A. is the numerical aperture of the objective lens) and that information is optically recorded on said groove such that information is recorded on said information recording layer in an optical modulation recording fashion using laser light in which substantially the width direction of said groove is set to the direction of an electric field vector or that information is recorded on said information recording layer by a magnetic field modulation recording fashion with illumination of laser light in which substantially the width direction of said groove is set to the direction of an electric field vector.

**11.** In an optical recording method of an optical recording medium according to claim 9 or 10, said optical recording method of an optical recording medium **characterized in that** a pitch GP (µm) of a groove is selected so as to satisfy the following equation:

$$1.0\ (\lambda/N.A.)/(650/0.52) < GP < 1.3(\lambda/N.A.)/(650/0.52) \quad (5)$$

(where $\lambda$ is the wavelength (nm) of illumination light and N.A. is the numerical aperture of the objective lens).

**12.** In an optical reproducing method of a domain wall displacement detection optical recording medium of a land and groove recording system, said optical reproducing method of an optical recording medium **characterized in that** said optical recording medium includes an information recording layer of laminated layer of respective magnetic layers of at least a recording layer, a switching layer and a displacement layer formed across said land and said groove, a depth d (nm) of a groove being selected so as to satisfy the following equation:

$$3\lambda/8n < d < 1\lambda/2n \quad (1)$$

or

$$1\lambda/2n < d < 3\lambda/4n \quad (2)$$

(where $\lambda$ is the wavelength of illumination light and n is the refractive index) and that information is read out from said optical recording medium by causing domain walls to move in said displacement layer of said information recording layer with illumination of reproducing laser light.

**13.** In an optical reproducing method of a domain wall displacement detection optical recording medium of a land and groove recording system, said optical reproducing method of an optical recording medium **characterized in that** said optical recording medium includes an information recording layer of a laminated layer of respective magnetic layers of at least a recording layer, a switching layer and a displacement layer formed across said land and said groove, a boundary between said land and said groove contains an inclined surface and that a width WL (nm) of a flat portion of said land and a width WG (nm) of a flat portion of said groove are selected so as to satisfy the following equations:

$$350(\lambda/N.A.)/(650/0.52) < WL < 550(\lambda/N.A.)/(650/0.52) \quad (3)$$

$$400(\lambda/N.A.)/(650/0.52) < WG < 600(\lambda/N.A.)/(650/0.52) \quad (4)$$

(where $\lambda$ is the wavelength (nm) of illumination light and N.A. is the numerical aperture of the objective lens).

**14.** In an optical reproducing method of an optical recording medium according to claim 12 or 13, said optical reproducing method of an optical recording medium **characterized in that** a pitch GP (µm) of a groove is selected so as to satisfy the following equation:

$$1.0(\lambda/N.A.)/(650/0.52) < GP < 1.3(\lambda/N.A.)/(650/0.52) \quad (5)$$

(where $\lambda$ is the wavelength (nm) of illumination light and N.A. is the numerical aperture of the objective lens).

**15.** In an optical reproducing method of an optical recording medium according to claim 12, 13 or 14, said optical reproducing method of an optical recording medium **characterized in that** said reproducing laser light relative to said groove has an electric field vector direction selected to be extended in substantially the width direction of said groove.

FIG. 1

11

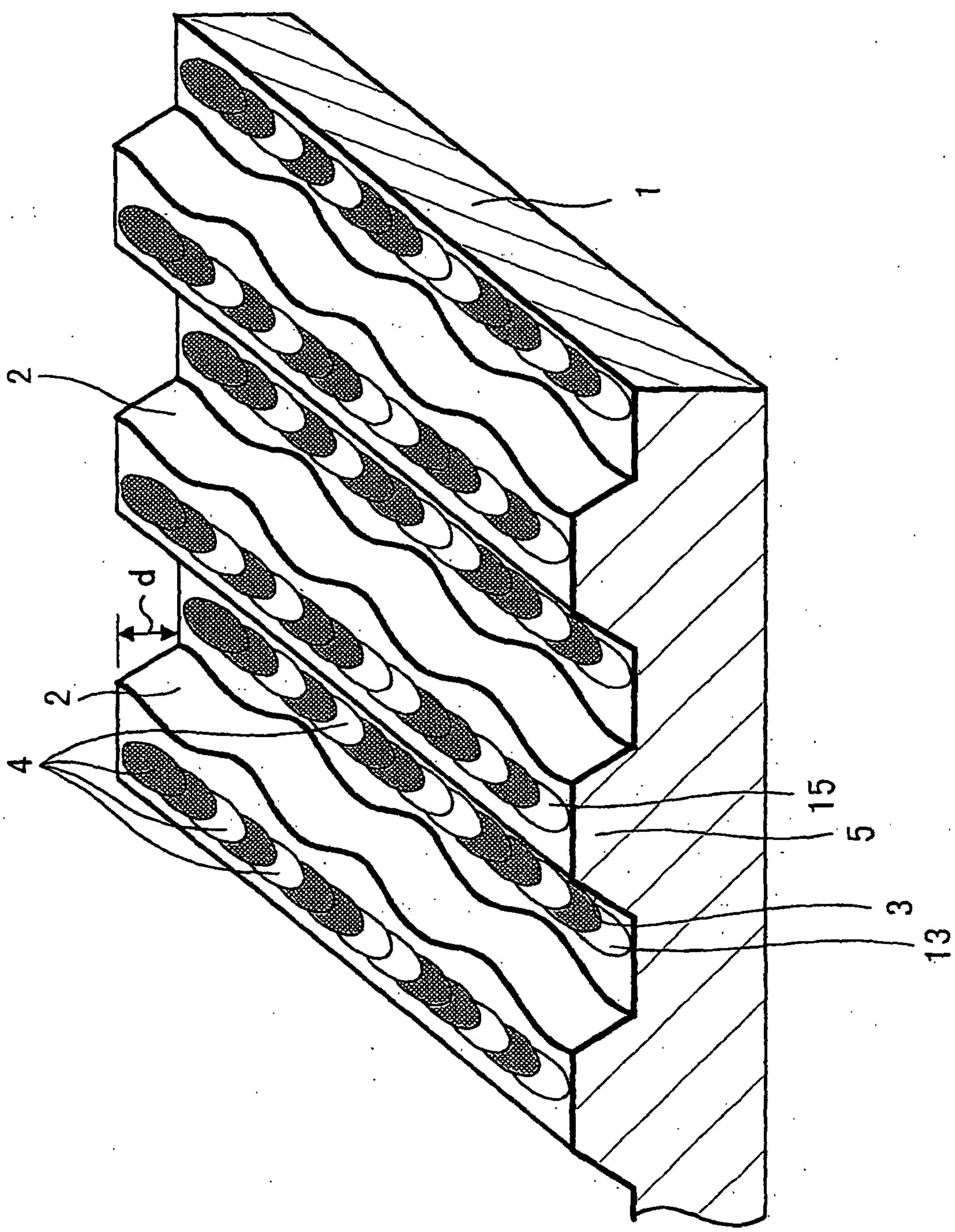

FIG. 2

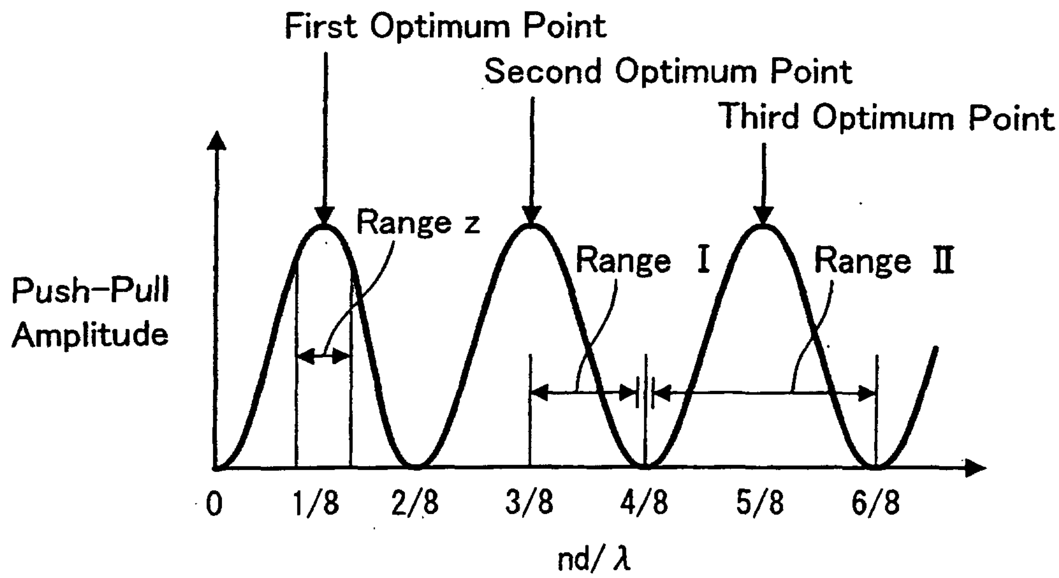
First Optimum Point
Second Optimum Point
Third Optimum Point
Range z
Range I
Range II
Push-Pull Amplitude
0
1/8
2/8
3/8
4/8
5/8
6/8
nd/λ

FIG. 3

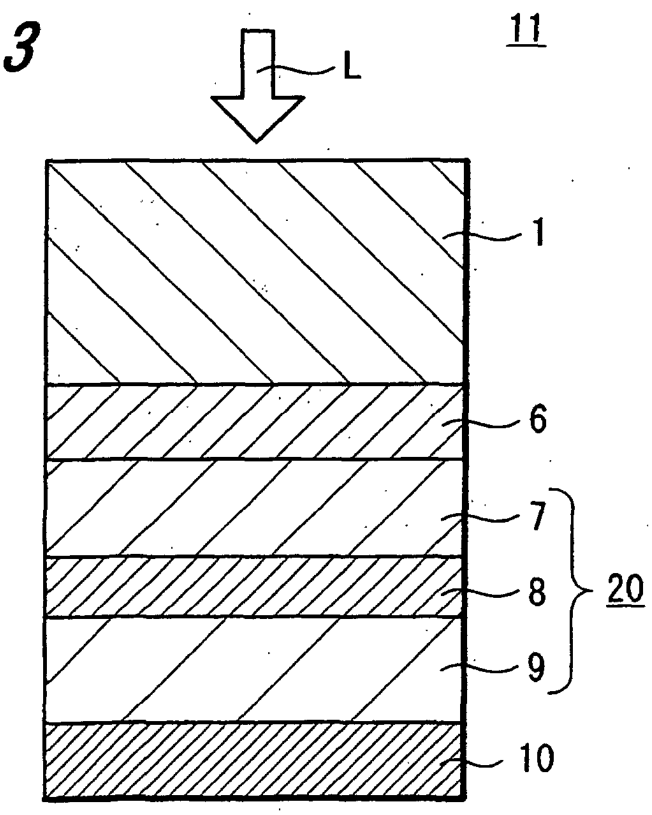
11
L
1
6
7
8
9
10
20

FIG. 4A

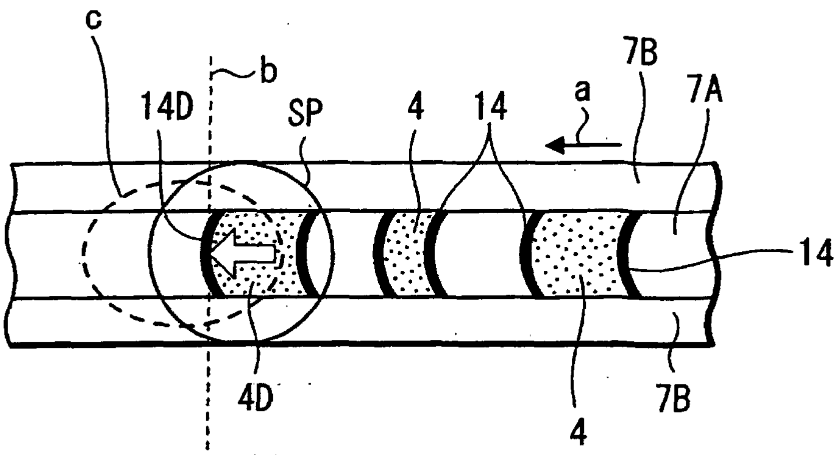


FIG. 4B

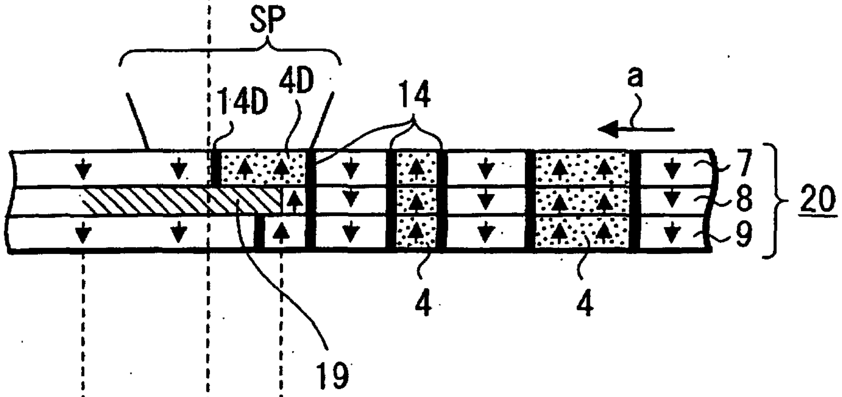


FIG. 4C

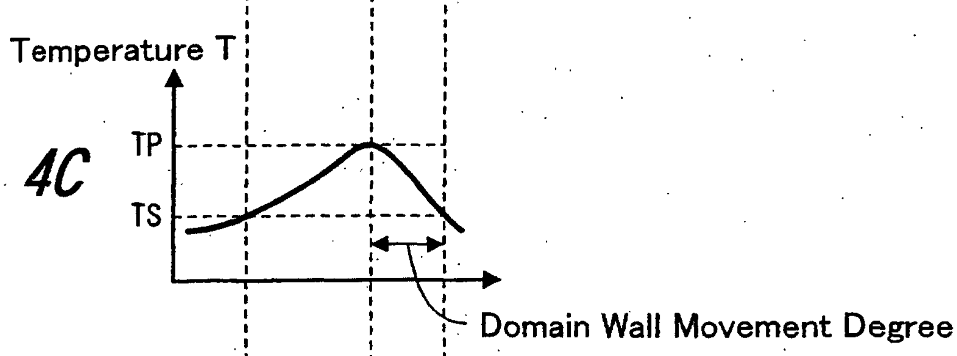


FIG. 4D

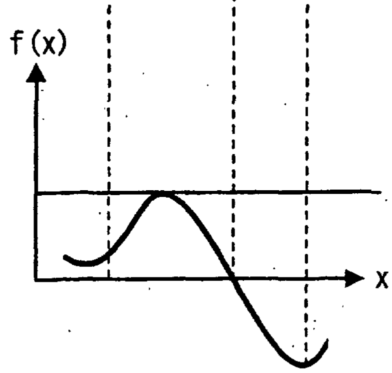

FIG. 5

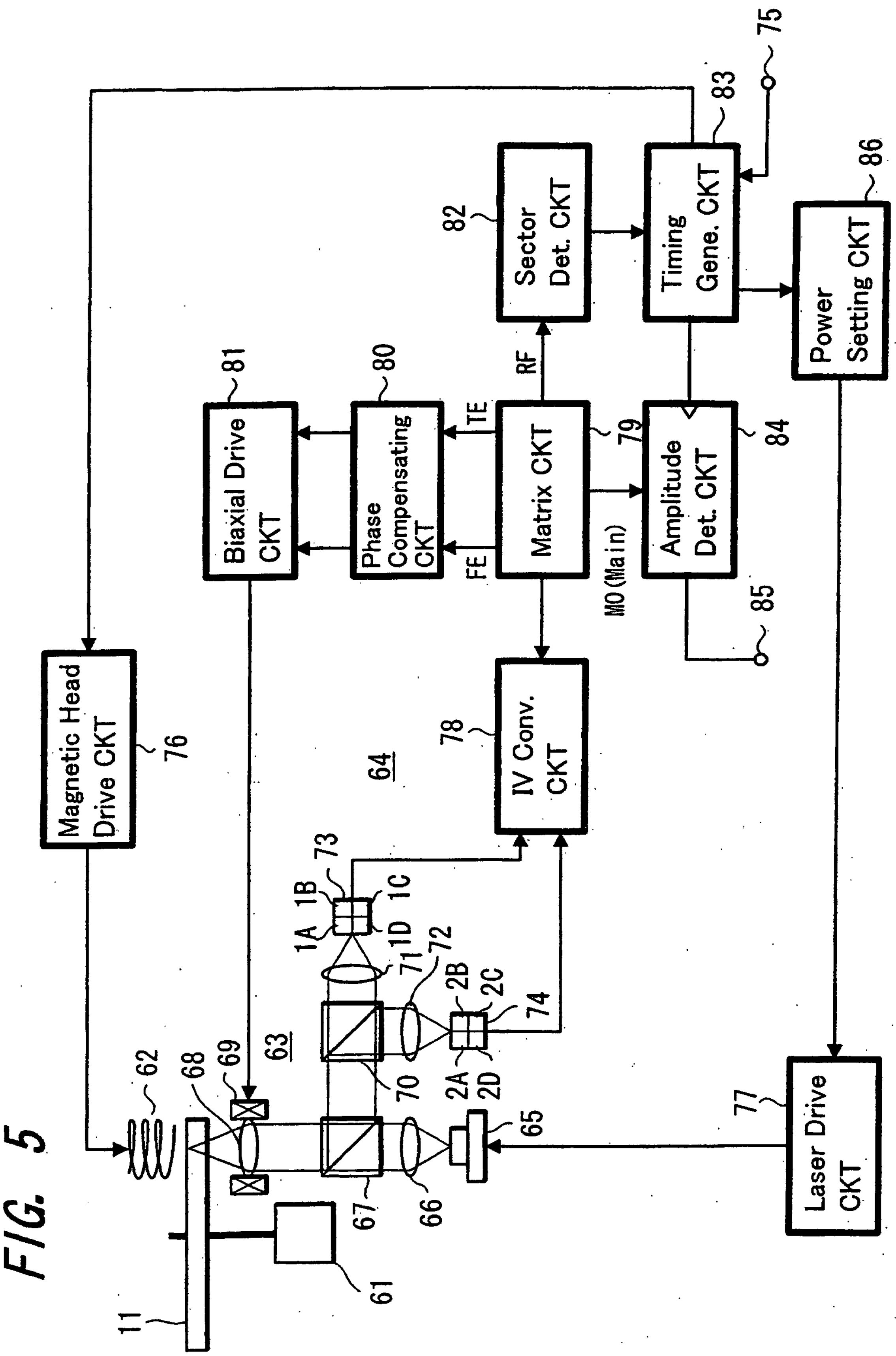
Magnetic Head Drive CKT
76
Biaxial Drive CKT
81
Phase Compensating CKT
80
Matrix CKT
79
Sector Det. CKT
82
Timing Gene. CKT
83
75
Power Setting CKT
86
Amplitude Det. CKT
84
85
MO (Main)
TE
FE
RF
IV Conv. CKT
78
64
63
Laser Drive CKT
77
11
61
62
65
66
67
68
69
70
71
72
73
74
1A
1B
1C
1D
2A
2B
2C
2D

FIG. 6

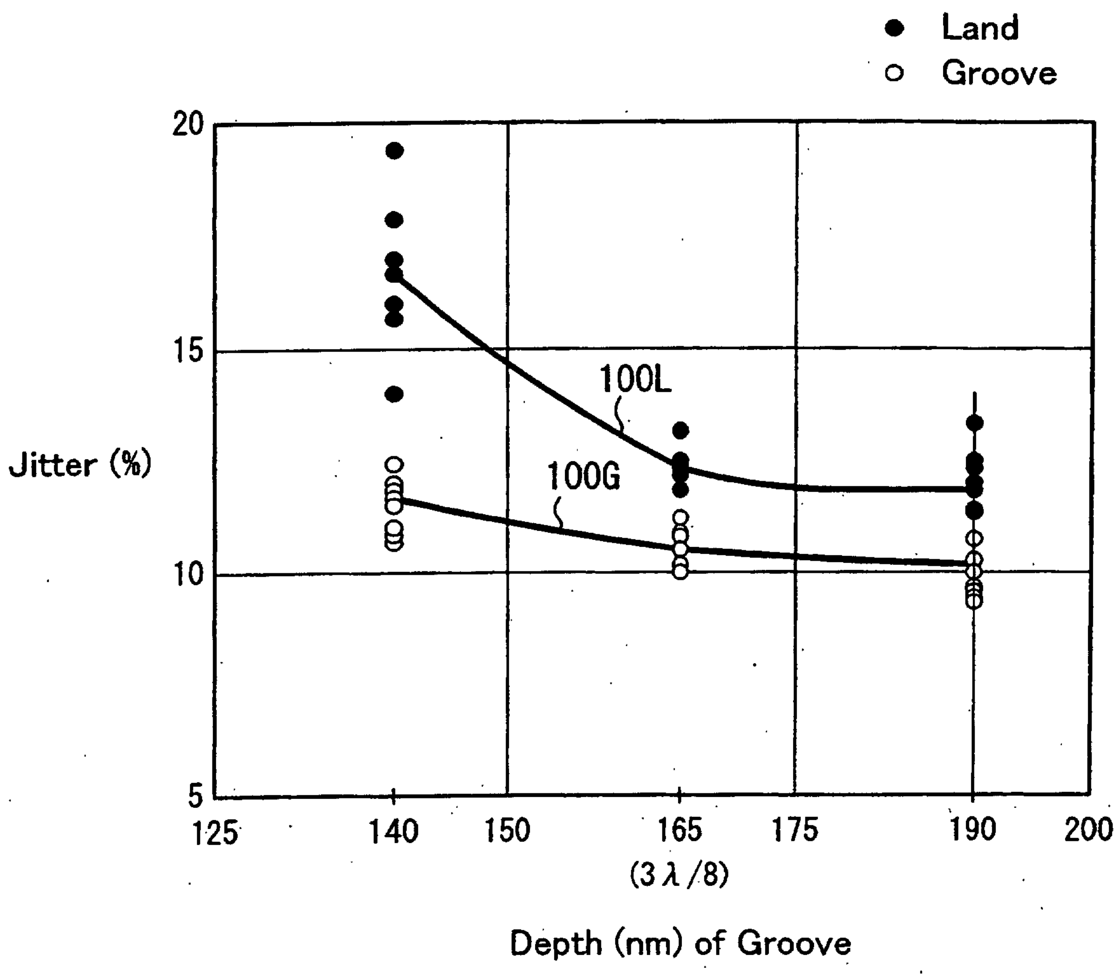
● Land
○ Groove
20
15
10
5
Jitter (%)
100L
100G
125
140
150
165
175
190
200
(3λ/8)
Depth (nm) of Groove

FIG. 7

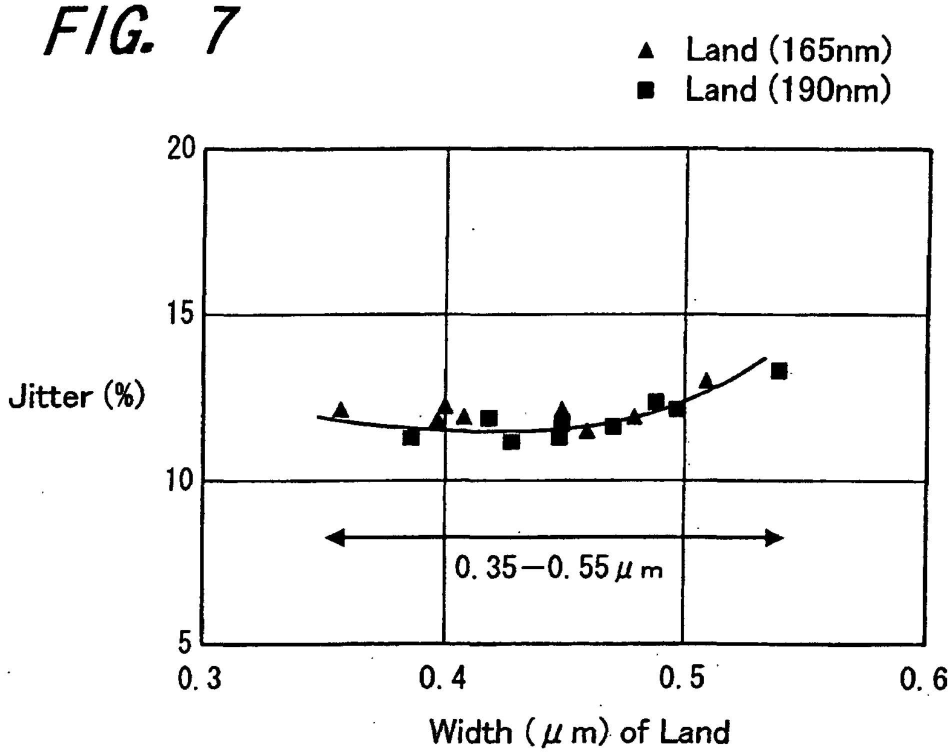
Land (165nm)
Land (190nm)
20
15
10
5
Jitter (%)
0.35−0.55 μm
0.3
0.4
0.5
0.6
Width (μm) of Land

FIG. 8

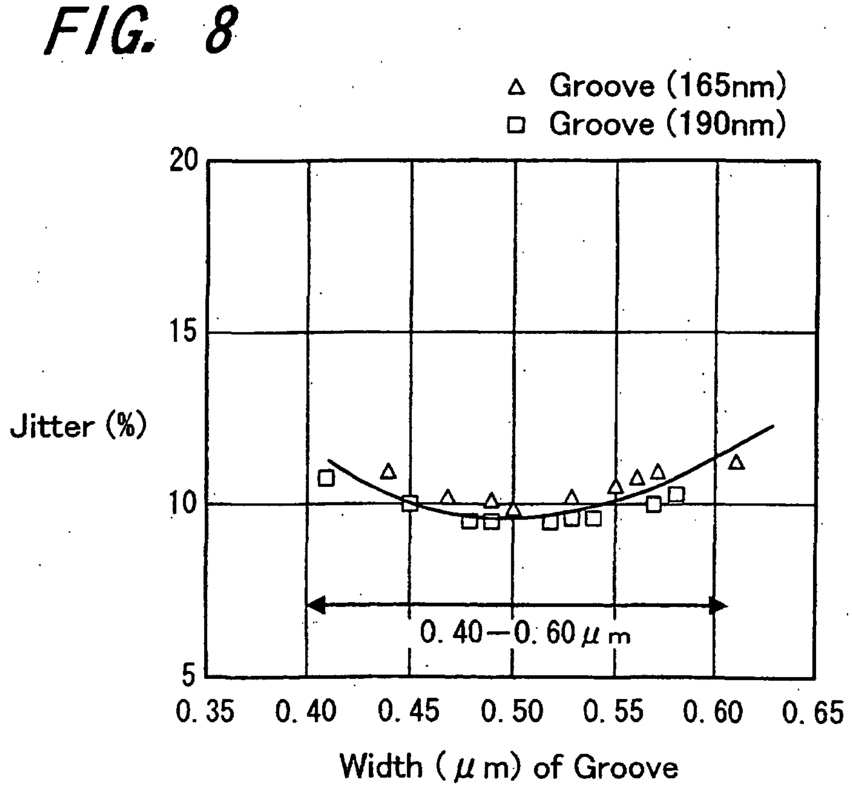
Groove (165nm)
Groove (190nm)
20
15
10
5
Jitter (%)
0.40−0.60 μm
0.35
0.40
0.45
0.50
0.55
0.60
0.65
Width (μm) of Groove

FIG. 9

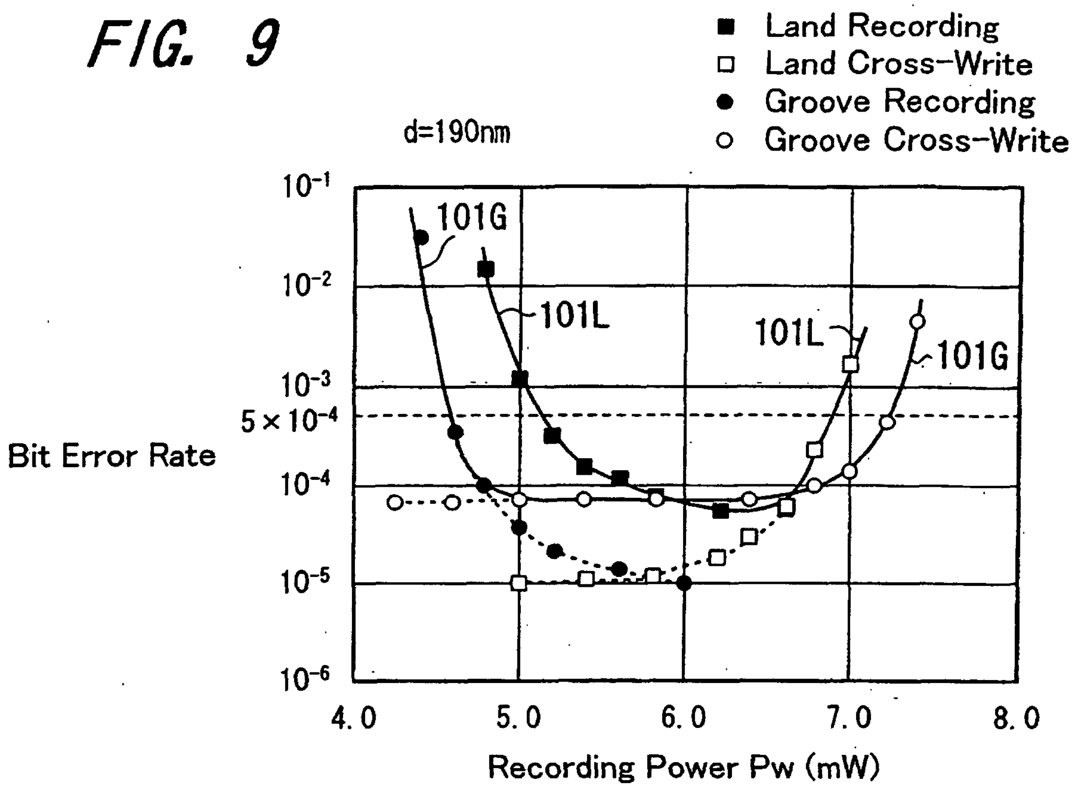
Land Recording
Land Cross-Write
Groove Recording
Groove Cross-Write
d=190nm
Bit Error Rate
10-1
10-2
10-3
5×10-4
10-4
10-5
10-6
101G
101L
101L
101G
4.0
5.0
6.0
7.0
8.0
Recording Power Pw (mW)

FIG. 10

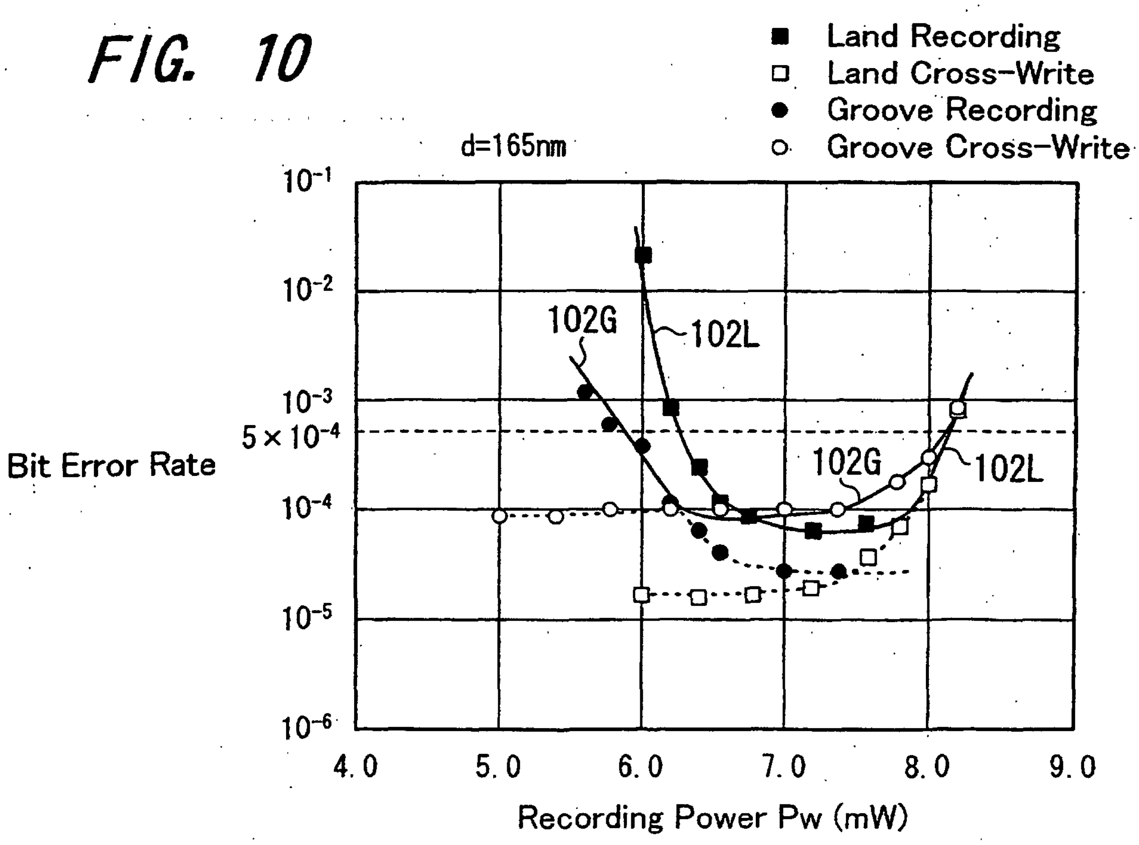
Land Recording
Land Cross-Write
Groove Recording
Groove Cross-Write
d=165nm
Bit Error Rate
10-1
10-2
10-3
5×10-4
10-4
10-5
10-6
102G
102L
102G
102L
4.0
5.0
6.0
7.0
8.0
9.0
Recording Power Pw (mW)

*FIG. 11*

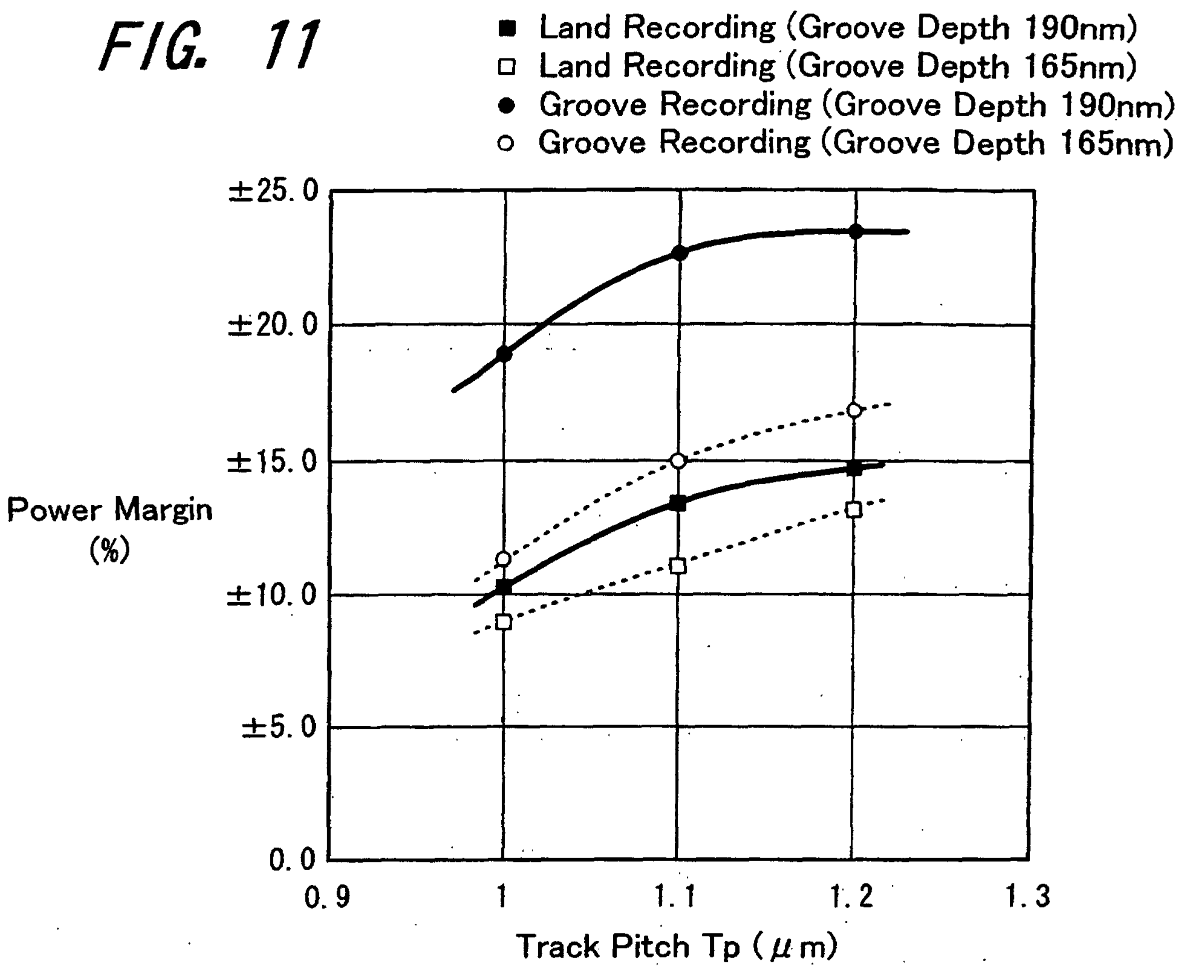
■ Land Recording (Groove Depth 190nm)
□ Land Recording (Groove Depth 165nm)
● Groove Recording (Groove Depth 190nm)
○ Groove Recording (Groove Depth 165nm)
±25.0
±20.0
±15.0
±10.0
±5.0
0.0
Power Margin (%)
0.9
1
1.1
1.2
1.3
Track Pitch Tp (μm)

FIG. 12

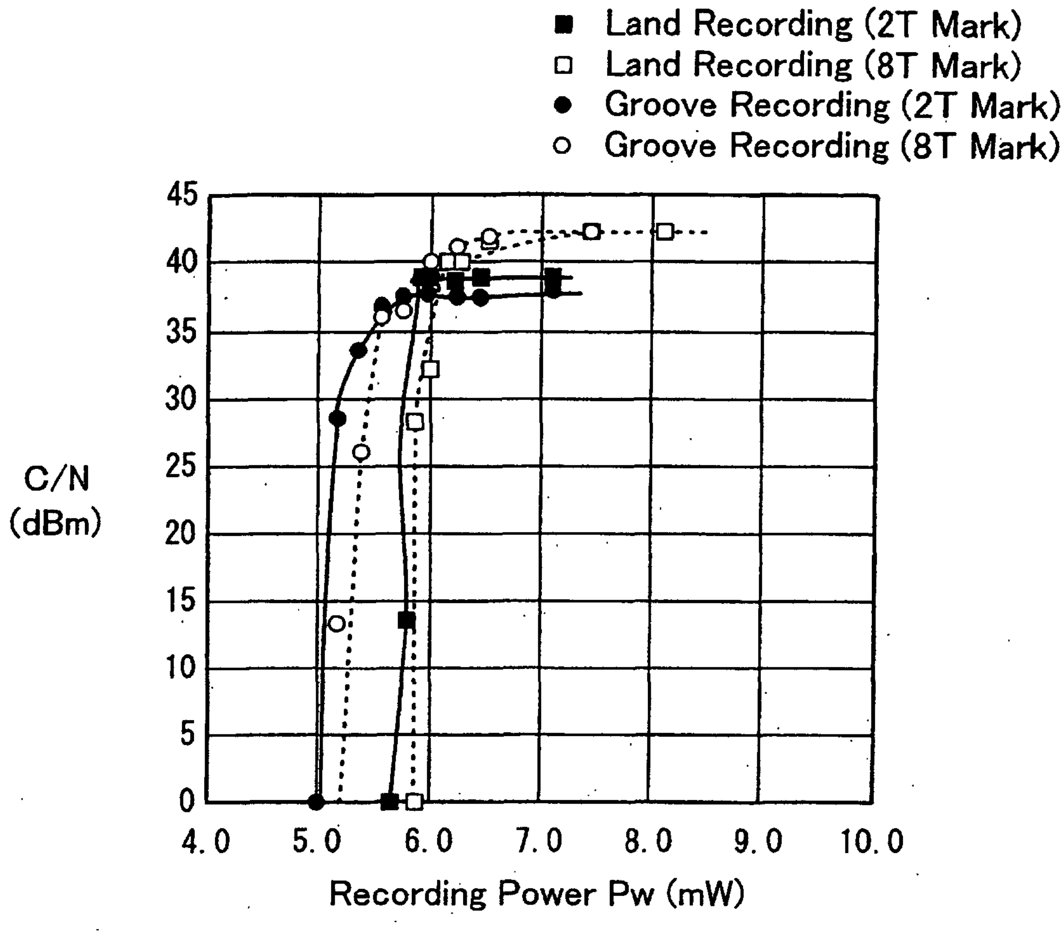
■ Land Recording (2T Mark)
□ Land Recording (8T Mark)
● Groove Recording (2T Mark)
○ Groove Recording (8T Mark)
C/N
(dBm)
45
40
35
30
25
20
15
10
5
0
4.0
5.0
6.0
7.0
8.0
9.0
10.0
Recording Power Pw (mW)

FIG. 13

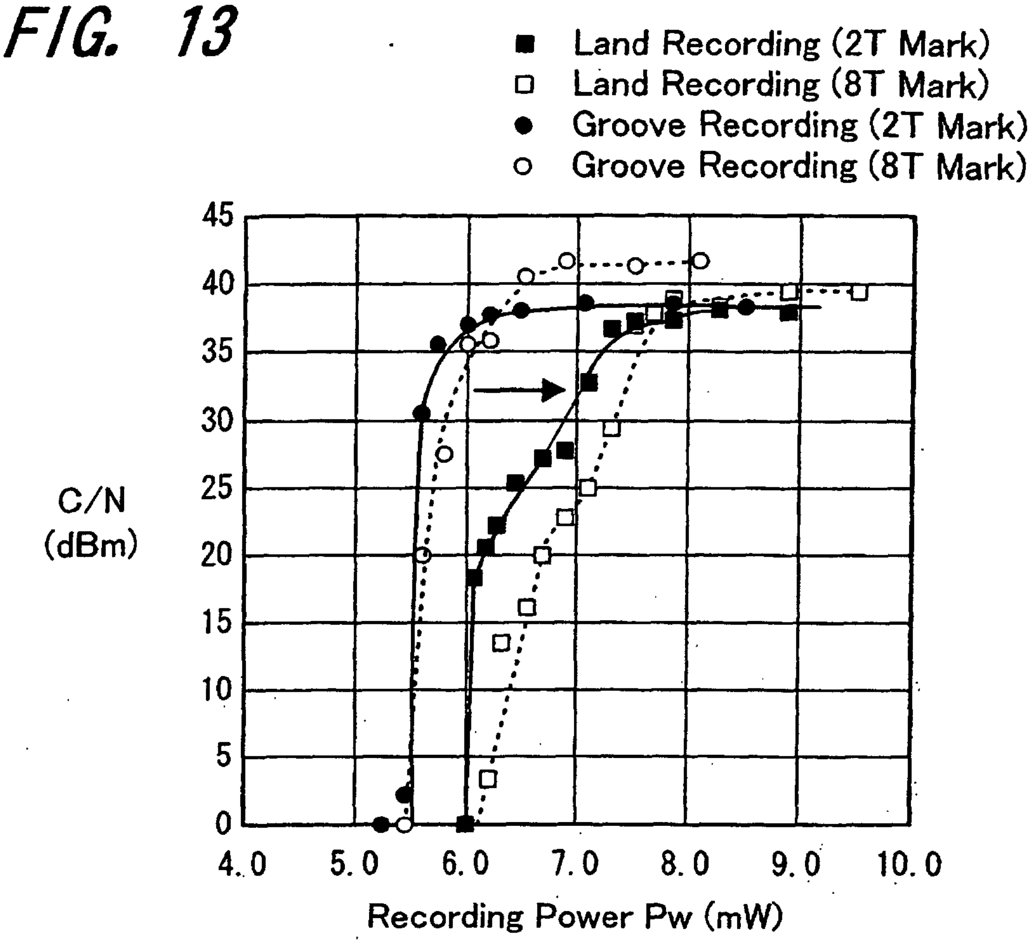
■ Land Recording (2T Mark)
□ Land Recording (8T Mark)
● Groove Recording (2T Mark)
○ Groove Recording (8T Mark)
C/N
(dBm)
45
40
35
30
25
20
15
10
5
0
4.0
5.0
6.0
7.0
8.0
9.0
10.0
Recording Power Pw (mW)

FIG. 14A

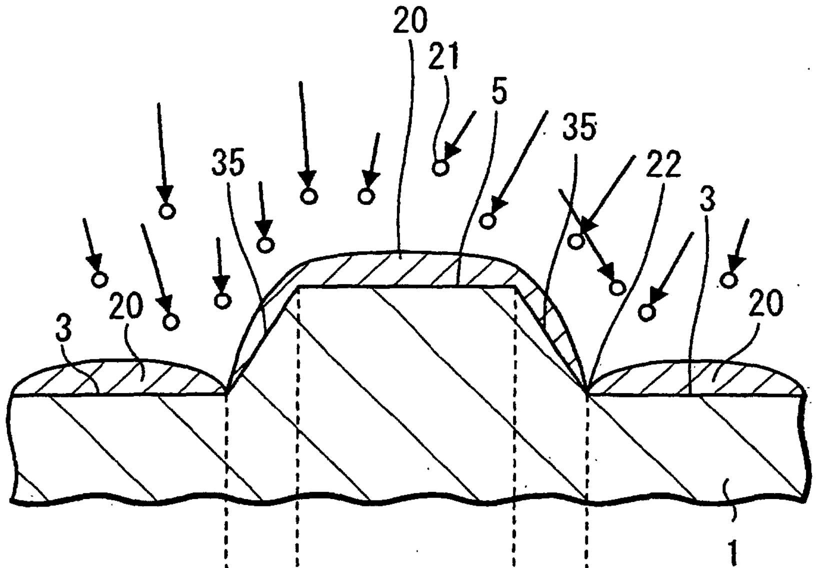


FIG. 14B

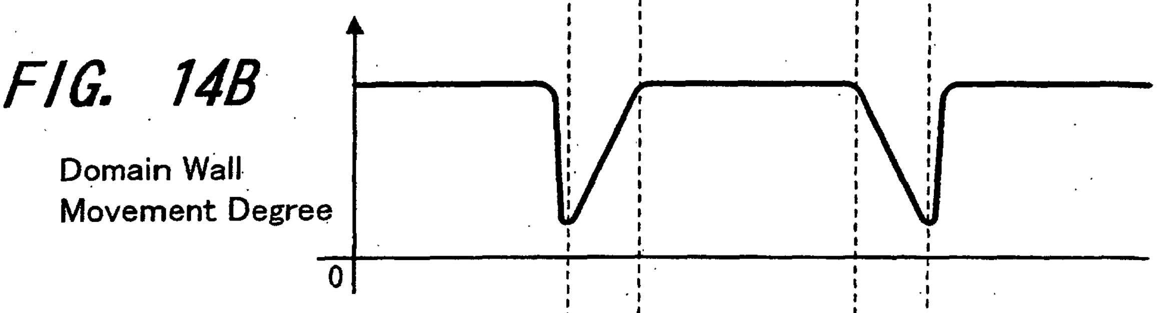


FIG. 14C

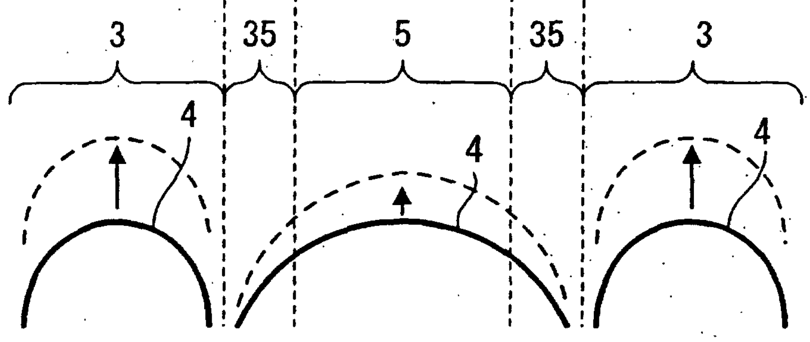

FIG. 15A

FIG. 15B

FIG. 15C1

FIG. 15C2

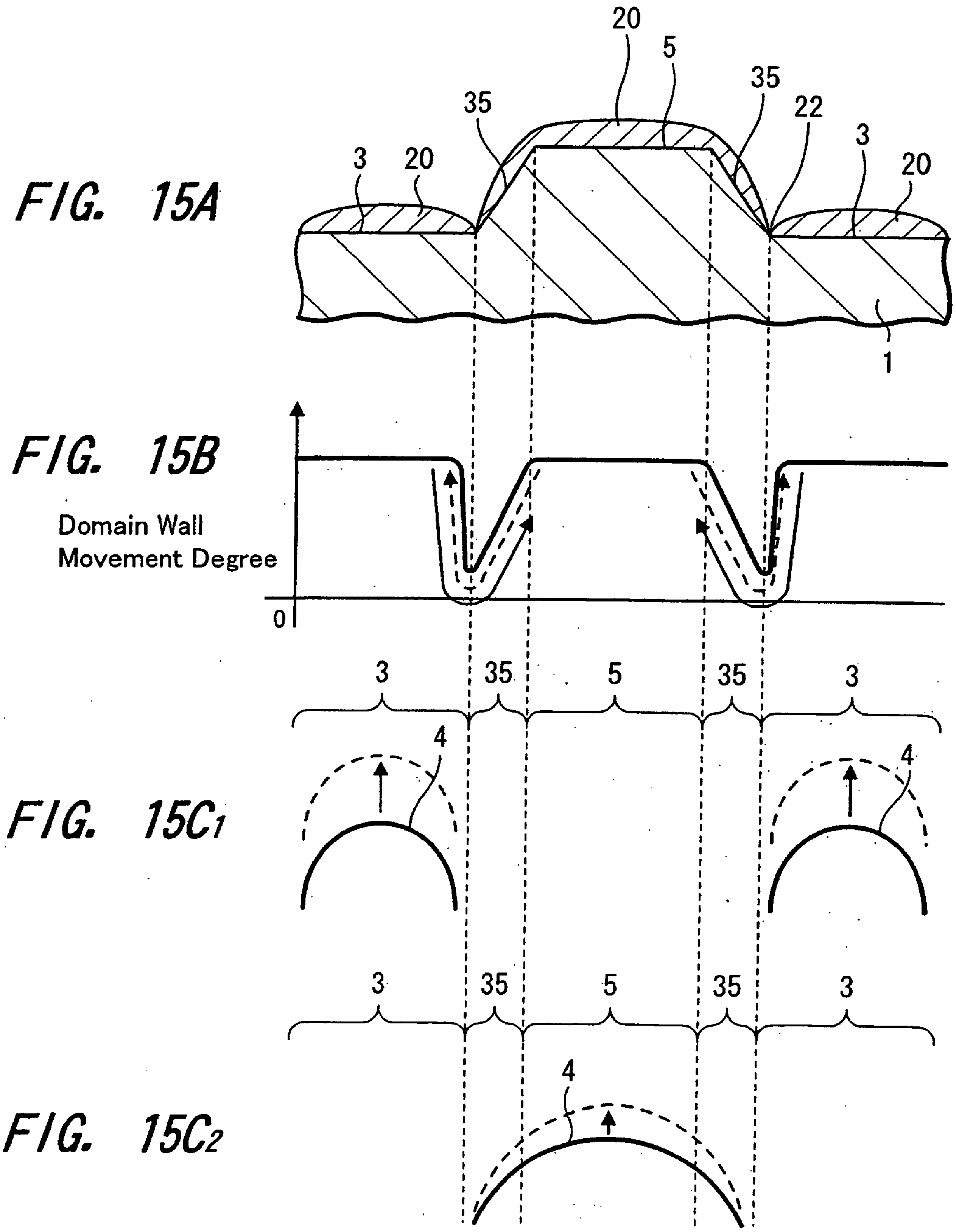

FIG. 16

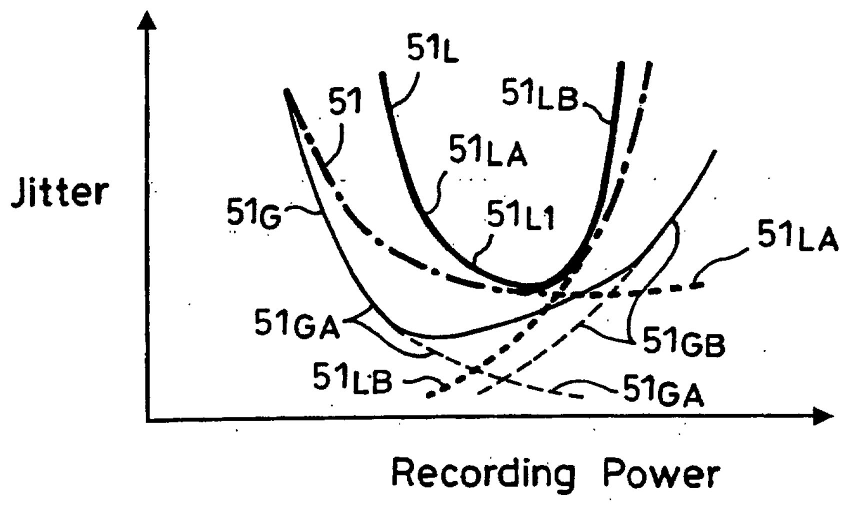
Jitter
51L
51
51LB
51LA
51G
51L1
51LA
51GA
51GB
51LB
51GA
Recording Power

DESCRIPTION OF REFERENCE NUMERALS

1 ... optical recording medium

2 ... side surface

3 ... groove

4 ... recording mark

4D ... enlarged mark

5 ... land

6 ... dielectric layer

7 ... displacement layer

8 ... switching layer

9 ... recording layer

10 ... protective layer

11 ... optical recording medium

13 ... groove recording portion

14 ... domain wall

15 ... land recording portion

19 ... magnetization lost area

20 ... information recording layer

21 ... flying particle

22 ... separated groove

35 ... slope

61 ... spindle motor

62 ... recording magnetic head

63 ... optical pickup device

## INTERNATIONAL SEARCH REPORT

International application No.
PCT/JP02/04027

**A. CLASSIFICATION OF SUBJECT MATTER**
Int.Cl$^7$ G11B11/105

According to International Patent Classification (IPC) or to both national classification and IPC

**B. FIELDS SEARCHED**

Minimum documentation searched (classification system followed by classification symbols)
Int.Cl$^7$ G11B11/105

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,X | JP 2001-184727 A (Sony Corp.), 06 July, 2001 (06.07.01), Full text; all drawings (Family: none) | 2,4,6,8, 10,13,15 |
| P,X | JP 2001-118293 A (Canon Inc.), 27 April, 2001 (27.04.01), Full text; all drawings (Family: none) | 2,6 |
| X | JP 10-275369 A (Canon Inc.), 13 October, 1998 (13.10.98), Full text; all drawings & US 6180208 A | 2,4,6,8, 10,13,15 |

☒ Further documents are listed in the continuation of Box C.  ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 July, 2002 (04.07.02) | 16 July, 2002 (16.07.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

International application No.
PCT/JP02/04027

C (Continuation). DOCUMENTS CONSIDERED TO BE RELEVANT

| Category* | Citation of document, with indication, where appropriate, of the relevant passages | Relevant to claim No. |
|---|---|---|
| X | JP 2000-293901 A (Canon Inc.), 20 October, 2000 (20.10.00), Full text; all drawings (Family: none) | 2,4,6,8, 10,13,15 |
| A | JP 10-261242 A (Sony Corp.), 29 September, 1998 (29.09.98), Full text; all drawings & EP 866447 A & KR 98080295 A & US 2001/0012264 A | 2,4,6,8, 10,13,15 |
| A | JP 08-124220 A (NEC Corp.), 17 May, 1996 (17.05.96), Full text; all drawings (Family: none) | 2,4,6,8, 10,13,15 |

Form PCT/ISA/210 (continuation of second sheet) (July 1998)

## INTERNATIONAL SEARCH REPORT

International application No.
PCT/JP02/04027

**Box I Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☒ Claims Nos.: 1, 3, 5, 7, 9, 11, 12, 14
because they relate to parts of the international application that do not comply with the prescribed requirements to such an extent that no meaningful international search can be carried out, specifically:

(See extra sheet)

3. ☐ Claims Nos.:
because they are dependent claims and are not drafted in accordance with the second and third sentences of Rule 6.4(a).

**Box II Observations where unity of invention is lacking (Continuation of item 2 of first sheet)**

This International Searching Authority found multiple inventions in this international application, as follows:

Claims 1, 3-5, 7-9, 11, 12, 14, 15 are characterized in that the depth d of a groove satisfies the expression (1) or (2).

Claims 2-4, 6-8, 10, 11, 13-15 are characterized in that the width of a land satisfies the expression (3), and the width of a groove the expression (4).

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.
☐ No protest accompanied the payment of additional search fees.

Form PCT/ISA/210 (continuation of first sheet (1)) (July 1998)

INTERNATIONAL SEARCH REPORT

International application No.
PCT/JP02/04027

Continuation of Box No.I-2 of continuation of first sheet(1)

Claims 1, 5, 9, 12:
(a) Of what refractive index n is unclear.
(b) On what the upper limit of the expression (1) is based is unclear.
(c) Nothing is mentioned in the description of an embodiment for selecting d that satisfies the expression (2). And on what the upper and lower limits of the expression (2) are based is unclear.

Claims 3, 7, 11, 14:
(a) Specifying GP is not described in the description.
(b) Expression (5) is not found in the description. (Bases of an upper limit and lower limit are unclear.)

Claims 4, 8, 15, when quoting the above claims, relate to a subject matter which this International Searching Authority is not required to search.

Form PCT/ISA/210 (extra sheet) (July 1998)